# EUROPEAN PATENT SPECIFICATION

(11) **EP 4 230 848 B1**
(45) Date of publication and mention of the grant of the patent: **31.07.2024**
(21) Application number: 22210138.8
(22) Date of filing: 29.11.2022
(51) Int. Cl.: F01N 1/00, F01N 3/10, F01N 13/00

(54) **EXHAUST SYSTEM AND STRADDLED VEHICLE PROVIDED THEREWITH**
ABGASSYSTEM UND DAMIT AUSGESTATTETES SITZFAHRZEUG
SYSTÈME D'ÉCHAPPEMENT ET VÉHICULE À ENFOURCHER ÉQUIPÉ DE CELUI-CI

(30) Priority: 16.02.2022 JP 2022021961
(43) Date of publication of application: 23.08.2023
(73) Proprietor: Yamaha Hatsudoki Kabushiki Kaisha, Iwata-shi, Shizuoka 438-8501 (JP)
(72) Inventor: TAKANO, Yoshihide, Iwata-shi, 4388501 (JP)
(74) Representative: Studio Torta S.p.A.

(56) References cited:
- EP-A1- 2 960 457
- EP-A1- 3 940 210
- WO-A1-2019/092744
- US-B2- 8 393 433

## Description

### TECHNICAL FIELD

This invention relates to an exhaust system and a straddled vehicle provided with the exhaust system.

Japanese Unexamined Patent Publication No. 2001-012239A discloses a two-wheeled motor vehicle. The two-wheeled motor vehicle of Japanese Unexamined Patent Publication No. 2001-012239A includes an engine and an exhaust system. The exhaust system includes an exhaust pipe and a muffler. The exhaust pipe is connected to the engine. The muffler is connected to the exhaust pipe. The muffler accommodates a catalyst and a silencer. The catalyst is arranged inside of the muffler.

More specifically, the muffler is connected to the exhaust pipe via a connection pipe. The connection pipe is connected to the exhaust pipe. The connection pipe is narrower than the exhaust pipe. A sectional area of a flow path of the connection pipe is smaller than a sectional area of a flow path of the exhaust pipe. The connection pipe is inserted from outside of the muffler into inside of the muffler. The connection pipe faces a center portion of the catalyst.

A configuration that the connection pipe is inserted from outside of the muffler into inside of the muffler is referred to as a first conventional configuration for convenience. Such a configuration that the sectional area of the flow path of the connection pipe is smaller than the sectional area of the flow path of the exhaust pipe is referred to as a second conventional configuration.

Exhaust gases flow from the engine to the exhaust pipe. The exhaust gases flow from the exhaust pipe to the connection pipe. When the exhaust gases enter the connection pipe from the exhaust pipe, the sectional area of the flow path of the exhaust gases decreases. When the exhaust gases enter the connection pipe from the exhaust pipe, a flow velocity of the exhaust gases increases. The exhaust gases are discharged from the connection pipe to the muffler. The exhaust gases pass through the catalyst in the muffler. The catalyst purifies the exhaust gases.

With the first conventional configuration, the exhaust gases mostly contact the center portion of the catalyst. Specifically, an amount of exhaust gases that the center portion of the catalyst receives is significantly larger than an amount of exhaust gases that a peripheral portion of the catalyst receives. In addition, with second conventional configuration, the exhaust gases intensively hit the center portion of the catalyst. Specifically, a flow velocity of exhaust gases at the center portion of the catalyst is significantly larger than a flow velocity of exhaust gases at the peripheral portion of the catalyst. Accordingly, the exhaust gases rapidly increase a temperature at the center portion of the catalyst. For example, the exhaust gases rapidly increase a temperature at the center portion of the catalyst even when the engine starts. Consequently, the center portion of the catalyst is activated rapidly. The center portion of the catalyst demonstrates a purification performance of the exhaust gases rapidly.

The following is a summary of an idea described in Japanese Unexamined Patent Publication No. 2001-012239A. Japanese Unexamined Patent Publication No. 2001-012239A discloses an approach to increase a deviation of an exhaust gas flow in the catalyst positively. Japanese Unexamined Patent Publication No. 2001-012239A discloses how to increase the deviation of the exhaust gas flow in the catalyst. For example, the first conventional configuration increases the deviation of the exhaust gas flow in the catalyst. The second conventional configuration also increases the deviation of the exhaust gas flow in the catalyst more largely.

The term "deviation of the exhaust gas flow in the catalyst" means a difference between an amount of exhaust gases that the center portion of the catalyst receives and an amount of exhaust gases that the peripheral portion of the catalyst receives, for example. The term "deviation of the exhaust gas flow in the catalyst" means a difference between an exhaust gas flow velocity at the center portion of the catalyst and an exhaust gas flow velocity at the peripheral portion of the catalyst, for example. The term "deviation of the exhaust gas flow in the catalyst" means a difference between the maximum exhaust gas flow velocity at an inlet face of the catalyst and the minimum exhaust gas flow velocity at the inlet face of the catalyst, for example. The term "deviation of the exhaust gas flow in the catalyst" is also called a "bias of the exhaust gas flow in the catalyst".

However, the exhaust system disclosed in Japanese Unexamined Patent Publication No. 2001-012239A may have a difficulty in further improving the purification performance of the catalyst. The following describes a reason for the above. In the first conventional configuration, it is difficult for the peripheral portion of the catalyst to demonstrate a purification performance. Accordingly, a use efficiency of the catalyst is low in the first conventional configuration. Moreover, it is difficult to improve the use efficiency of the catalyst in the first conventional configuration. For example, it is difficult to use the peripheral portion of the catalyst for purification of the exhaust gases in the first conventional configuration. For example, it is difficult to use the entire of the catalyst for purification of the exhaust gases in the first conventional configuration. Consequently, it is difficult to further improve the purification performance of the catalyst in the first conventional configuration.

The exhaust system disclosed in Japanese Unexamined Patent Publication No. 2001-012239A may have a difficulty in further shortening time for activating the catalyst. The following describes a reason for the above. Arrangement of the catalyst inside of the muffler is referred to as a first layout for convenience. The exhaust system of Japanese Unexamined Patent Publication No. 2001-012239A adopts the first layout. The muffler is positioned far from the engine. Accordingly, the catalyst is positioned far from the engine in the first layout. Specifically, in the first layout, a flow path of the exhaust gases between the engine and the catalyst is relatively long. In addition, it is difficult to position the muffler near the engine. Accordingly, it is difficult to position the catalyst near the engine in the first layout. Specifically, in the first layout, it is difficult to shorten the flow path of the exhaust gases between the engine and the catalyst. Consequently, in the first layout, it is difficult to further shorten time for activating the catalyst.

Now, it is suggested to arrange the catalyst outside of the muffler. The arrangement of the catalyst outside of the muffler is referred to as a second layout for convenience. In the second layout, the catalyst is located upstream of the muffler in a direction of the exhaust gas flow. In the second layout, the catalyst is positioned near the engine. Specifically, in the second layout, a flow path of the exhaust gases between the engine and the catalyst is shorter than a flow path of the exhaust gases between the engine and the muffler. Consequently, in the second layout, it is easy to further shorten time for activating the catalyst.

On the other hand, the second layout possesses drawbacks. One drawback of the second layout is that a deviation of the exhaust gas flow in the catalyst is increased. Another drawback of the second layout is that a use efficiency of the catalyst is lowered. Another drawback of the second layout is that a purification performance of the catalyst is lowered.

The following describes the drawbacks of the second layout. The exhaust pipe includes a curved portion. When the exhaust gases flow through the curved portion of the exhaust pipe, the exhaust gases are subjected to a centrifugal force. Accordingly, the exhaust gas flow deviates at a cross sectional face of the flow path of the curved portion. More specifically, the flow path of the curved portion includes an inner flow path and an outer flow path in the cross sectional face of the curved portion. The outer flow path is located more outward than the inner flow path. The outer flow path is curved at a radius of curvature larger than that of the inner flow path. When the exhaust gases flow through the curved portion, an exhaust gas flow deviates to the outer flow path. The exhaust gases in the outer flow path flow more rapidly than the exhaust gases in the inner flow path. As described above, in the second layout, the flow path of the exhaust gases between the engine and the catalyst is short. In the second layout, the catalyst is positioned near the engine. Accordingly, the flow path of the exhaust gases between the curved portion and the catalyst is also short. The catalyst is positioned near the curved portion. Consequently, it is difficult to reduce the deviation of the exhaust gas flow, generated at the curved portion, in the flow path of the exhaust gases between the curved portion and the catalyst. As a result, the exhaust gas flow still deviates also in the catalyst. For example, the deviation of the exhaust gas flow in the catalyst is substantially equal to the deviation of the exhaust gas flow in the curved portion. For example, the deviation of the exhaust gas flow in the catalyst is substantially as large as the deviation of the exhaust gas flow in the curved portion.

The following is a summary of the drawbacks of the second layout. In the second layout, the curved portion is positioned near the catalyst. Accordingly, in the second layout, the curved portion significantly deviates the exhaust gas flow in the catalyst. As a result, a use efficiency of the catalyst is lowered. The purification performance of the catalyst is lowered.

WO 2014/129014 discloses an exhaust system configured to suppress the drawbacks of the second layout. The exhaust system of WO 2014/129014 adopts the second layout. Specifically, the exhaust system in WO 2014/129014 includes a first exhaust pipe, an enlarged portion, a housing portion, a catalyst, a second exhaust pipe, and a muffler. The first exhaust pipe is connected to an engine. The first exhaust pipe includes a curved portion. The enlarged portion is connected to the first exhaust pipe. The housing portion is connected to the enlarged portion. The catalyst is arranged inside of the housing portion. The second exhaust pipe is connected to the housing portion. The muffler is connected to the second exhaust pipe. As described above, the catalyst is arranged outside of the muffler. The catalyst is located upstream of the muffler in a direction of the exhaust gas flow.

The exhaust system of WO 2014/129014 does not adopt the first conventional configuration described above. That is, the first exhaust pipe is not inserted into inside of the enlarged portion. The first exhaust pipe has a downstream end. For example, the downstream end of the first exhaust pipe entirely contacts the enlarged portion. For example, the downstream end of the first exhaust pipe entirely continues to the enlarged portion. Accordingly, a joint structure of the first exhaust pipe and the enlarged portion does not contribute to an increase in deviation of the exhaust gas flow in the catalyst. As a result, the joint structure between of first exhaust pipe and the enlarged portion does not promote reduction in purification performance of the catalyst. That is, the joint structure of the first exhaust pipe and the enlarged portion does not promote the drawbacks of the second layout.

The enlarged portion further includes a projection portion. The projection portion is provided inside of the enlarged portion. The projection portion is formed by denting an outer face of the enlarged portion and pushing out an inner face of the enlarged portion toward inside of the enlarged portion. When the exhaust gases flow through the enlarged portion, the exhaust gases partially hit the projection portion. The projection portion diffuses the exhaust gases. After the exhaust gases are diffused, the exhaust gases reach the catalyst. This reduces a deviation of the exhaust gas flow in the catalyst. For example, the exhaust gas flow in the catalyst is made more uniform. This can suppress reduction in purification performance of the catalyst. As described above, the projection portion suppresses the reduction in purification performance of the catalyst. That is, the projection portion suppresses the drawback of the second layout.

Even in the exhaust system of International Publication 2014/129014, it may sometimes be difficult to reduce the deviation of the exhaust gas flow in the catalyst. Consequently, it may sometimes be difficult to improve the purification performance of the catalyst even in the exhaust system of International Publication 2014/129014.

The present invention has been made regarding the state of the art noted above, and its one object is to provide an exhaust system and a straddled vehicle with the exhaust system, the exhaust system being capable of shortening time for activating a catalyst and reducing a deviation of an exhaust gas flow in the catalyst.

An example of approaches for reducing the deviation of the exhaust gas flow in the catalyst is to use a flow regulating member. The flow regulating member is arranged in at least either a first exhaust pipe or an enlarged portion. The flow regulating member regulates an exhaust gas flow. Accordingly, the flow regulating member reduces a deviation of the exhaust gas flow. After passing through the flow regulating member, the exhaust gases reach the catalyst. Accordingly, the deviation of the exhaust gas flow in the catalyst is small. As described above, the flow regulating member reduces the deviation of the exhaust gas flow in the catalyst.

EP-A-3940210 discloses a straddled vehicle including an exhaust pipe, an expansion chamber case, a catalyst case, and a catalyst. The exhaust gas flows through the exhaust pipe. The expansion chamber case is connected to the exhaust pipe. The catalyst case is connected to the expansion chamber case. The catalyst is disposed inside the catalyst case. At least a portion of the catalyst case overlaps with a cylinder body of an internal combustion engine in a vehicle side view.

EP-A-2960457 discloses an exhaust purification device having high exhaust purification performance, which can be implemented with a simple structure. In an exhaust purification device in which catalyst is carried in a plurality of honeycomb bodies that are arranged in series so as to be spaced from one another through gaps, a single outer tube constituting a part of an exhaust passage of an exhaust device of an internal combustion engine is provided, a first honeycomb body, a second honeycomb body and a third honeycomb body are accommodated in this order from an upstream side of exhaust in the outer tube, the catalyst is carried in passages of the first honeycomb body, the second honeycomb body and the third honeycomb body, the second honeycomb body is shared as the same part as the third honeycomb body, the first honeycomb body has the same outer diameter as the second honeycomb body and the third honeycomb body, and the number of cells per unit area of cells comparted in a gird form in the first honeycomb body is smaller than the number of cells in the third honeycomb body.

US-B-8,393,433 discloses an exhaust pipe connected to an exhaust port of an engine and an expansion chamber is disposed in the vicinity of the engine. A main tube is provided that extends rearwardly from a head pipe disposed at the front side of a main body. An engine having a cylinder extending upwardly from a crankcase is disposed under the main tube with an exhaust port open at the front side of the cylinder. A first exhaust pipe is provided that is connected to the exhaust port. A down tube is disposed on the center line in the left-right direction of the main body. The exhaust port disposed behind the down tube is deviatingly open at one side from the center line. The first exhaust pipe extends forward from one side of the down tube, and to the other side of the down tube, subsequently turns, and extends again to one side.

WO-A-2019/092744 discloses an exhaust system of an internal combustion engine comprises an exhaust pipe, a catalyst device and a muffler wherein the exhaust pipe comprises of a first exhaust pipe and a second exhaust pipe. An exhaust shield configured to shield the catalyst device and at least a portion of the first exhaust pipe. The exhaust shield comprises a plurality of exhaust shield elements, which are joined together to form a tubular exhaust shied around a portion of the exhaust system.

### DESCRIPTION OF THE INVENTION

However, when the flow regulating member is used, a configuration of the first exhaust pipe and the enlarged portion should be complex. Now, the Inventor has made study on an approach not to use the flow regulating member. The Inventor has made study on an approach that is capable of reducing the deviation of the exhaust gas flow in the catalyst with a simple configuration.

The present invention is constituted as stated below to achieve the above object. One aspect of the present invention provides an exhaust system according to the features of claim 1.

The exhaust system guides exhaust gases of the engine. The exhaust system includes the first exhaust pipe, the enlarged portion, the housing portion, the catalyst, the second exhaust pipe, and the muffler. The first exhaust pipe is connected to the engine. The enlarged portion is connected to the first exhaust pipe. The housing portion is connected to the enlarged portion. The catalyst is arranged inside of the housing portion. The second exhaust pipe is connected to the housing portion. The muffler is connected to the second exhaust pipe. Accordingly, the catalyst is arranged outside of the muffler. That is, the exhaust system adopts the second layout described above.

The exhaust gases flow from the engine to the first exhaust pipe. The exhaust gases flow from the first exhaust pipe to the enlarged portion. The exhaust gases flow from the enlarged portion to the housing portion. The exhaust gases pass through the catalyst arranged inside of the housing portion. The exhaust gases flow from the housing portion to the second exhaust pipe. The exhaust gases flow from the second exhaust pipe to the muffler. Accordingly, the catalyst is located downstream of the engine in a direction of the exhaust gas flow. The catalyst is located upstream of the muffler in the direction of the exhaust gas flow. A flow path of the exhaust gases between the engine and the catalyst is shorter than a flow path of the exhaust gases between the engine and the muffler. That is, the catalyst is positioned relatively near the engine. In short, in the second layout, the flow path of the exhaust gases between the engine and the catalyst is short. In the second layout, the catalyst is positioned near the engine. Consequently, time for activating the catalyst is suitably short.

The first exhaust pipe is located downstream of the engine in the direction of the exhaust gas flow. The first exhaust pipe is located upstream of the catalyst in the direction of the exhaust gas flow. The first exhaust pipe includes the curved portion. Accordingly, the catalyst is located downstream of the curved portion in the direction of the exhaust gas flow. Moreover, a flow path of the exhaust gases between the curved portion and the catalyst is shorter than a flow path of the exhaust gases between the curved portion and the muffler. That is, the catalyst is positioned relatively near the curved portion. In short, in the second layout, the flow path of the exhaust gases between the curved portion and the catalyst is short. In the second layout, the catalyst is positioned near the curved portion.

The first exhaust pipe includes the straight portion. The straight portion extends linearly from the curved portion. The straight portion is connected to the enlarged portion. The straight portion is located downstream of the curved portion in the direction of the exhaust gas flow. The straight portion is located upstream of the catalyst in the direction of the exhaust gas flow. Here, a flow path of the straight portion is part of the flow path of the exhaust gases between the curved portion and the catalyst. As described above, in the second layout, the flow path of the exhaust gases between the curved portion and the catalyst is short. In the second layout, the catalyst is positioned near the curved portion. Accordingly, in the second layout, the flow path of the straight portion is short.

The enlarged portion has the upstream end and the downstream end. The upstream end of the enlarged portion is connected to the straight portion. The downstream end of the enlarged portion is connected to the housing portion. The enlarged portion forms a flow path. The flow path of the enlarged portion enlarges from the upstream end of the enlarged portion to the downstream end of the enlarged portion. The straight portion is inserted from outside of the enlarged portion into inside of the enlarged portion through the upstream end of the enlarged portion. In addition, the straight portion extends toward the catalyst.

The feature that "the straight portion is inserted from outside of the enlarged portion into inside of the enlarged portion through the upstream end of the enlarged portion" is referred to as a first configuration for convenience. The first configuration is similar to the first conventional configuration of Japanese Unexamined Patent Publication No. 2001-012239A. Accordingly, at first glance, it is assumed that the first configuration increases a deviation of the exhaust gas flow in the catalyst. In other words, at first glance, it is considered that the first configuration prevents achievement of the object of the present invention.

However, the Inventor has found the following about the first configuration. That is, when the catalyst is positioned near the curved portion, the first configuration does not increase the deviation of the exhaust gas flow in the catalyst, but rather decreases the deviation of the exhaust gas flow in the catalyst. In other words, the first configuration in combination of the second layout can produce a useful effect for achieving the object of the present invention.

A causal relationship between the first configuration and the effect of the first configuration is presumed as under. The causal relationship between the first configuration and the effect of the first configuration corresponds to a reason why the first configuration decreases the deviation of the exhaust gas flow in the catalyst when the catalyst is positioned near the curved portion. When the exhaust gases flow in the curved portion, the exhaust gas flow is deviated at a cross sectional face of the flow path of the curved portion. The exhaust gases flow from the curved portion to the straight portion. As described above, in the second layout, the flow path of the straight portion is short. When the catalyst is positioned near the curved portion, the flow path of the straight portion is short. Accordingly, the exhaust gas flow is still deviated also at the downstream end of the straight portion. The exhaust gases are discharged from the straight portion through the downstream end of the straight portion. When the exhaust gases are discharged from the straight portion, the exhaust gas flow is deviated. Thereafter, the exhaust gases pass through the enlarged portion to reach the catalyst. In the first configuration, at least part of the downstream end of the straight portion is apart from the enlarged portion. In other words, in the first configuration, at least part of the downstream end of the straight portion does not contact the enlarged portion. In the first configuration, at least part of the downstream end of the straight portion does not continue to the enlarged portion. Accordingly, after the exhaust gases are discharged from the straight portion, the exhaust gases do not flow smoothly along the enlarged portion. After the exhaust gases are discharged from the straight portion, the exhaust gases are not guided sufficiently by the enlarged portion. Accordingly, after the exhaust gases are discharged from the straight portion, the exhaust gas flow is disturbed within the enlarged portion. The exhaust gas flow is disturbed within the enlarged portion before the exhaust gases enter the catalyst. As described above, when the exhaust gases are discharged from the straight portion, the exhaust gas flow is deviated. When the deviated exhaust gas flow is disturbed, the deviation of the exhaust gas flow is reduced. Accordingly, the deviation of the exhaust gas flow is reduced within the enlarged portion. More specifically, the deviation of the exhaust gas flow is reduced after the exhaust gases are discharged from the straight portion and before the exhaust gases reach the catalyst. The deviation of the exhaust gas flow is reduced after the exhaust gases flow out of the curved portion and before the exhaust gases enter the catalyst. In such a manner as above, the first configuration with the second layout contributes to reduction in deviation of the exhaust gas flow in the catalyst. When the catalyst is positioned near the curved portion, the first configuration contributes to reduction in deviation of the exhaust gas flow in the catalyst. That is, the first configuration with the second layout is useful for reducing the deviation of the exhaust gas flow in the catalyst.

As described above, the exhaust system according to the present invention is capable of shortening time for activating the catalyst and reducing the deviation of the exhaust gas flow in the catalyst. Accordingly, this suitably improves purification performance of the catalyst.

It is preferred in the exhaust system described above that the curved portion is curved at an angle of 45 degrees or more. The angle at which the curved portion is curved is relatively large. Accordingly, the deviation of the exhaust gas flow in the curved portion is relatively large. Even when the angle at which the curved portion is curved is large, however, the first configuration with the second layout is useful for reducing the deviation of the exhaust gas flow in the catalyst.

It is preferred in the exhaust system described above that the straight portion has an upstream end contacting the curved portion, and
a first distance between the upstream end of the straight portion and the downstream end of the enlarged portion is smaller than twice as large as a diameter of the downstream end of the enlarged portion.

The first distance corresponds to a length of a flow path between the downstream end of the curved portion and the upstream end of the housing portion. The first distance is relatively small. Even when first distance is small, however, the first configuration with the second layout is useful for reducing the deviation of the exhaust gas flow in the catalyst.

It is preferred in the exhaust system described above that the catalyst has an inlet face through which the exhaust gases enter the catalyst, and
a second distance between the upstream end of the straight portion and the inlet face of the catalyst is smaller than three times as large as a diameter of the downstream end of the enlarged portion.

The second distance corresponds to a length of the flow path of the exhaust gases between the downstream end of the curved portion and the inlet face of the catalyst. The second distance is relatively small. Even when second distance is small, however, the first configuration with the second layout is useful for reducing the deviation of the exhaust gas flow in the catalyst.

It is preferred in the exhaust system described above that the second distance is smaller than twice as large as a diameter of the downstream end of the enlarged portion. The second distance is much smaller. Even when the second distance is much smaller, however, the first configuration with the second layout is useful for reducing the deviation of the exhaust gas flow in the catalyst.

It is preferred in the exhaust system described above that the straight portion includes a first section positioned outside of the enlarged portion, and
a length of the first section is smaller than a diameter of the downstream end of the enlarged portion.

The length of the first section corresponds to a length of a flow path of the exhaust gases between the downstream end of the curved portion and the upstream end of the enlarged portion. The length of the first section is relatively small. Even when the length of the first section is small, however, the first configuration with the second layout is useful for reducing the deviation of the exhaust gas flow in the catalyst.

It is preferred in the exhaust system described above that the straight portion includes a second section positioned inside of the enlarged portion,
the second section includes an outer surface,
the enlarged portion includes an inner surface, and
at least part of the outer surface of the second section is apart from the inner surface of the enlarged portion.

At least part of the outer surface of the second section does not contact the inner surface of the enlarged portion. At least part of the outer surface of the second section does not continue to the inner surface of the enlarged portion. Accordingly, after the exhaust gases are discharged from the second section, the exhaust gases do not flow smoothly along the enlarged portion. Consequently, after the exhaust gases are discharged from the second section, the exhaust gas flow is suitably disturbed within the enlarged portion. Therefore, the deviation of the exhaust gas flow is suitably reduced within the enlarged portion. This results in suitable reduction in deviation of the exhaust gas flow in the catalyst.

It is preferred in the exhaust system described above that a separation distance between the straight portion and the catalyst is larger than the diameter of the downstream end of the enlarged portion. The separation distance between the straight portion and the catalyst corresponds to the length of the flow path of the exhaust gases between the downstream end of the straight portion and the inlet face of the catalyst. The separation distance between the straight portion and the catalyst is not excessively small. Accordingly, the deviation of the exhaust gas flow is suitably reduced after the exhaust gases are discharged from the straight portion and before the exhaust gases reach the catalyst. This results in suitable reduction in deviation of the exhaust gas flow in the catalyst.

It is preferred in the exhaust system described above that the separation distance between the straight portion and the catalyst is smaller than twice as large as the diameter of the downstream end of the enlarged portion. The separation distance between the straight portion and the catalyst is relatively small. Even when the separation distance between the straight portion and the catalyst is small, however, the first configuration with the second layout is useful for reducing the deviation of the exhaust gas flow in the catalyst.

It is preferred in the exhaust system described above that the straight portion is entirely positioned upstream of the downstream end of the enlarged portion, and the catalyst is entirely positioned downstream of the downstream end of the enlarged portion. The entire of the straight portion is positioned upstream of the downstream end of the enlarged portion. The entire of the straight portion is positioned upstream of the entire of the downstream end of the enlarged portion. The entire of the straight portion is positioned upstream of the entire of the downstream end of the enlarged portion in the direction of the exhaust gas flow. Accordingly, the entire of the exhaust gases discharged from the straight portion enter the enlarged portion. Consequently, the deviation of the exhaust gas flow is suitably reduced within the enlarged portion. The entire of the catalyst is positioned downstream of the downstream end of the enlarged portion. The entire of the catalyst is positioned downstream of the entire of the downstream end of the enlarged portion. The entire of the catalyst is positioned downstream of the entire of the downstream end of the enlarged portion in the direction of the exhaust gas flow. Accordingly, the exhaust gases enter the catalyst after the exhaust gases flow out of the enlarged portion. The exhaust gases do not enter the catalyst before the exhaust gases flow out of the enlarged portion. Consequently, the exhaust gases enter the catalyst after the deviation of the exhaust gas flow is reduced within the enlarged portion. This results in suitable reduction in deviation of the exhaust gas flow in the catalyst.

It is preferred in the exhaust system described above that the straight portion has a downstream end, and
the downstream end of the straight portion is located inside of the enlarged portion and is open to the enlarged portion.

The exhaust gases are discharged from the straight portion through the downstream end of the straight portion. Accordingly, the exhaust gases enter the enlarged portion immediately after the exhaust gases are discharged from the straight portion. Consequently, the deviation of the exhaust gas flow is reduced immediately after the exhaust gases are discharged from the straight portion. This results in suitable reduction in deviation of the exhaust gas flow in the catalyst.

It is preferred in the exhaust system described above that
the straight portion has
   an upstream end contacting the curved portion, and
   a downstream end open in the enlarged portion, and
a diameter of the straight portion is substantially constant from the upstream
end of the straight portion to the downstream end of the straight portion.

The diameter of the downstream end of the straight portion is not smaller than the diameter of the upstream end of the straight portion. Accordingly, a flow velocity of the exhaust gases at the downstream end of the straight portion does not increase from a flow velocity of the exhaust gases at the upstream end of the straight portion. Consequently, the flow path of the straight portion does not contribute to an increase in deviation of the exhaust gas flow in the catalyst. The flow path of the straight portion does not prevent decrease in deviation of the exhaust gas flow in the catalyst. The flow path of the straight portion does not prevent achievement of the object of the present invention. Therefore, the first configuration with the second layout reduces the deviation of the exhaust gas flow in the catalyst more easily. When the diameter of the straight portion is substantially constant from the upstream end of the straight portion to the downstream end of the straight portion, the first configuration with the second layout reduces the deviation of the exhaust gas flow in the catalyst more easily.

It is preferred in the exhaust system described above that
the straight portion has
   an upstream end contacting the curved portion,
   a downstream end open in the enlarged portion, and
   a central axis passing through the center of the flow path in the straight portion, and
the flow path of the straight portion at the downstream end is substantially as large as the flow path of the straight portion at the upstream end when seen from the central axis of the straight portion.

The flow path of the straight portion at the downstream end is not smaller than the flow path of the straight portion at the upstream end. Accordingly, a flow velocity of the exhaust gases at the downstream end of the straight portion does not increase from a flow velocity of the exhaust gases at the upstream end of the straight portion. Consequently, the flow path of the straight portion does not contribute to an increase in deviation of the exhaust gas flow in the catalyst. The flow path of the straight portion does not prevent decrease in deviation of the exhaust gas flow in the catalyst. The flow path of the straight portion does not prevent achievement of the object of the present invention. Therefore, the first configuration with the second layout reduces the deviation of the exhaust gas flow in the catalyst more easily. When the flow path of the straight portion at the downstream end is substantially as large as the flow path of the straight portion at the upstream end when seen from the central axis of the straight portion, the first configuration with the second layout reduces the deviation of the exhaust gas flow in the catalyst more easily.

It is preferred in the exhaust system described above that the straight portion has a central axis passing through the center of the flow path in the straight portion, and
the downstream end of the straight portion is inclined relative to the central axis of the straight portion.

The deviation of the exhaust gas flow is suitably reduced in the enlarged portion after the exhaust gases are discharged from the straight portion. This results in suitable reduction in deviation of the exhaust gas flow in the catalyst.

It is preferred in the exhaust system described above that the straight portion has a central axis passing through the center of the flow path in the straight portion, and
the downstream end of the straight portion is orthogonal to the central axis of the straight portion.

The deviation of the exhaust gas flow is suitably reduced in the enlarged portion after the exhaust gases are discharged from the straight portion. This results in suitable reduction in deviation of the exhaust gas flow in the catalyst.

It is preferred that the exhaust system described above includes an upstream oxygen sensor attached to either the enlarged portion or the housing portion.

When the upstream oxygen sensor is attached to the enlarged portion, the upstream oxygen sensor is located near the catalyst. Accordingly, the upstream oxygen sensor detects an oxygen concentration of the exhaust gases at an appropriate position. The upstream oxygen sensor appropriately detects the oxygen concentration of exhaust gases upstream of the catalyst. Likewise, when the upstream oxygen sensor is attached to the housing portion, the upstream oxygen sensor is located near the catalyst. Accordingly, the upstream oxygen sensor detects an oxygen concentration of the exhaust gases at an appropriate position. The upstream oxygen sensor appropriately detects the oxygen concentration of exhaust gases upstream of the catalyst.

According to the invention the curved portion has a central axis passing through the center of a flow path in the curved portion,
the curved portion includes
   an inner curved portion positioned more inward than the central axis of the curved portion, having a U-shaped cross sectional face, and extending along the central axis of the curved portion, and
   an outer curved portion positioned more outward than the central axis of the curved portion, having a U-shaped cross sectional face, and extending along the central axis of the curved portion,
the straight portion includes
   an inner straight portion continuing to the inner curved portion, and
   an outer straight portion continuing to the outer curved portion, and
a length of the outer straight portion is larger than a length of the inner straight portion.

The curved portion includes the inner curved portion and the outer curved portion. When the exhaust gases flow through the curved portion, a centrifugal force acts on the exhaust gases. The centrifugal force has a direction from the inner curved portion to the outer curved portion. Accordingly, the exhaust gas flow in the curved portion is deviated to the outer curved portion. For example, the exhaust gases in the outer curved portion flow more rapidly than the exhaust gases in the inner curved portion. The exhaust gases flow from the curved portion to the straight portion. The straight portion includes the inner straight portion and the outer straight portion. The inner straight portion continues to the inner curved portion. Accordingly, the exhaust gases flow from the inner curved portion to the inner straight portion. The outer straight portion continues to the outer curved portion. Consequently, the exhaust gases flow from the outer curved portion to the outer straight portion. As described above, the exhaust gas flow in the curved portion is deviated to the outer curved portion. Accordingly, the exhaust gas flow in the straight portion is deviated to the outer straight portion. For example, the exhaust gases in the outer straight portion flow more rapidly than the exhaust gases in the inner straight portion. The exhaust gases are discharged from the inner straight portion to the enlarged portion. The exhaust gases are discharged from the outer straight portion to the enlarged portion. Thereafter, the exhaust gases flow from the enlarged portion to the catalyst. As described above, the exhaust gas flow in the straight portion is deviated to the outer straight portion. Here, the length of the outer straight portion is larger than the length of the inner straight portion. Accordingly, the outer straight portion is further apart from the enlarged portion. The outer straight portion is further separated from the enlarged portion. Consequently, the deviation of the exhaust gas flow is effectively reduced after the exhaust gases flow out of the curved portion and before the exhaust gases enter the catalyst. This results in effective reduction in deviation of the exhaust gas flow in the catalyst.

It is preferred in the exhaust system described above that
the inner straight portion includes an inner second section positioned inside of the enlarged portion,
the outer straight portion includes an outer second section positioned inside of the enlarged portion, and
a length of the outer second section is larger than a length of the inner second section.

The inner straight portion includes the inner second section. The outer straight portion includes the outer second section. The inner second section and the outer second section are each positioned inside of the enlarged portion. The exhaust gases are discharged from the inner straight portion to the enlarged portion through the inner second section. The exhaust gases are discharged from the outer straight portion to the enlarged portion through the outer second section. As described above, the exhaust gas flow in the straight portion is deviated to the outer straight portion. Here, the length of the outer second section is larger than the length of the inner second section. Accordingly, the outer second section is inserted into inside of the enlarged portion more deeply than the inner second section. Consequently, the outer second section is further apart from the enlarged portion. The outer second section is further separated from the enlarged portion. Consequently, the deviation of the exhaust gas flow is effectively reduced after the exhaust gases flow out of the curved portion and before the exhaust gases enter the catalyst. This results in effective reduction in deviation of the exhaust gas flow in the catalyst.

It is preferred that the exhaust system described above further includes an upstream oxygen sensor attached to the enlarged portion,
the enlarged portion including
   an inner enlarged portion positioned outward of the inner second section, and
   an outer enlarged portion positioned outward of the outer second section, and
the upstream oxygen sensor is inserted from outside of the enlarged portion into inside of the enlarged portion through the inner enlarged portion.

The enlarged portion has the inner enlarged portion and the outer enlarged portion. The inner enlarged portion is positioned outward of the inner second section. The outer enlarged portion is positioned outward of the outer second section. The upstream oxygen sensor is inserted from outside of the enlarged portion into inside of the enlarged portion through the inner enlarged portion. Accordingly, the upstream oxygen sensor is positioned near the inner second section. Here, the length of the inner second section is smaller than the length of the outer second section. This easily prevents interference between the upstream oxygen sensor and the inner second section. In addition, the upstream oxygen sensor is positioned far from the outer second section. This also easily prevents interference between the upstream oxygen sensor and the outer second section. In summary, since the upstream oxygen sensor is attached to the inner enlarged portion, the interference between the upstream oxygen sensor and the straight portion is suitably avoidable.

It is preferred in the exhaust system described above that the straight portion has a central axis passing through the center of the flow path in the straight portion,
the upstream oxygen sensor overlaps the flow path of the straight portion when seen from the central axis of the straight portion,
the upstream oxygen sensor overlaps the straight portion when seen from a first direction perpendicular to the central axis of the straight portion, and
the upstream oxygen sensor does not overlap the straight portion when seen from a second direction perpendicular to the central axis of the straight portion and different from the first direction.

The upstream oxygen sensor overlaps the flow path of the straight portion when seen from the central axis of the straight portion. Moreover, the upstream oxygen sensor overlaps the straight portion when seen from the first direction. Here, the first direction is perpendicular to the central axis of the straight portion. Accordingly, at least part of the upstream oxygen sensor is arranged adjacent to the downstream end of the straight portion. Consequently, the upstream oxygen sensor detects an oxygen concentration of the exhaust gases at an appropriate position. The upstream oxygen sensor appropriately detects the oxygen concentration of exhaust gases upstream of the catalyst. On the other hand, the upstream oxygen sensor does not overlap the straight portion when seen from the second direction. Here, the second direction is perpendicular to the central axis of the straight portion and is different from the first direction. As a result, interference between the upstream oxygen sensor and the straight portion is suitably avoidable.

Another aspect of the present invention provides a straddled vehicle, including the exhaust system described above.

The straddled vehicle includes the exhaust system described above. Accordingly, the straddled vehicle according to the present invention is capable of shortening time for activating the catalyst and reducing the deviation of the exhaust gas flow in the catalyst. This suitably improves purification performance of the catalyst.

### BRIEF DESCRIPTION OF THE DRAWINGS

For the purpose of illustrating the invention, there are shown in the drawings several forms which are presently preferred, it being understood, however, that the invention is not limited to the precise arrangement and instrumentalities shown.
Fig. 1 is a right side view of a straddled vehicle according to an embodiment.
Fig. 2 is a right side view of the straddled vehicle according to the embodiment.
Fig. 3 is a partial bottom view of the straddled vehicle according to the embodiment.
Fig. 4 is a partial sectional view of an exhaust system.
Fig. 5 is a side view of a first exhaust pipe.
Fig. 6 is a sectional view of the first exhaust pipe.
Fig. 7 is a perspective view of the first exhaust pipe.
Fig. 8A is a perspective view of an inner curved portion and an inner straight portion.
Fig. 8B is a perspective view of an outer curved portion and an outer straight portion.
Fig. 9 is a sectional view of the curved portion and the straight portion.
Fig. 10 is a side view of the curved portion and the straight portion.
Fig. 11 illustrates the straight portion and an upstream oxygen sensor when seen from a first direction shown in Fig. 10.
Fig. 12 illustrates the straight portion, an enlarged portion, and the upstream oxygen sensor when seen from a central axis of the straight portion.
Fig. 13 is a perspective view of the enlarged portion.
Fig. 14 is a sectional view of the enlarged portion, a housing portion, and a reduced portion.
Fig. 15 is a sectional view of the straight portion, the enlarged portion, the housing portion, and a catalyst.
Fig. 16 is a sectional view of an exhaust system of the prior art.
Fig. 17 is a right side view of the straddled vehicle according to another modification.
Fig. 18 is a right side view of the straddled vehicle according to another modification.
Fig. 19 is a right side view of the straddled vehicle according to another modification.
Fig. 20 is a partial bottom view of the straddled vehicle according to the modification.
Fig. 21 is a partial bottom view of the straddled vehicle according to another modification.
Fig. 22 is a right side view of the straddled vehicle according to another modification.

### EMBODIMENTS OF THE INVENTION

A straddled vehicle 1 according to this invention will be described hereinafter with reference to the drawings.

### <1. Outline Construction of Straddled Vehicle 1>

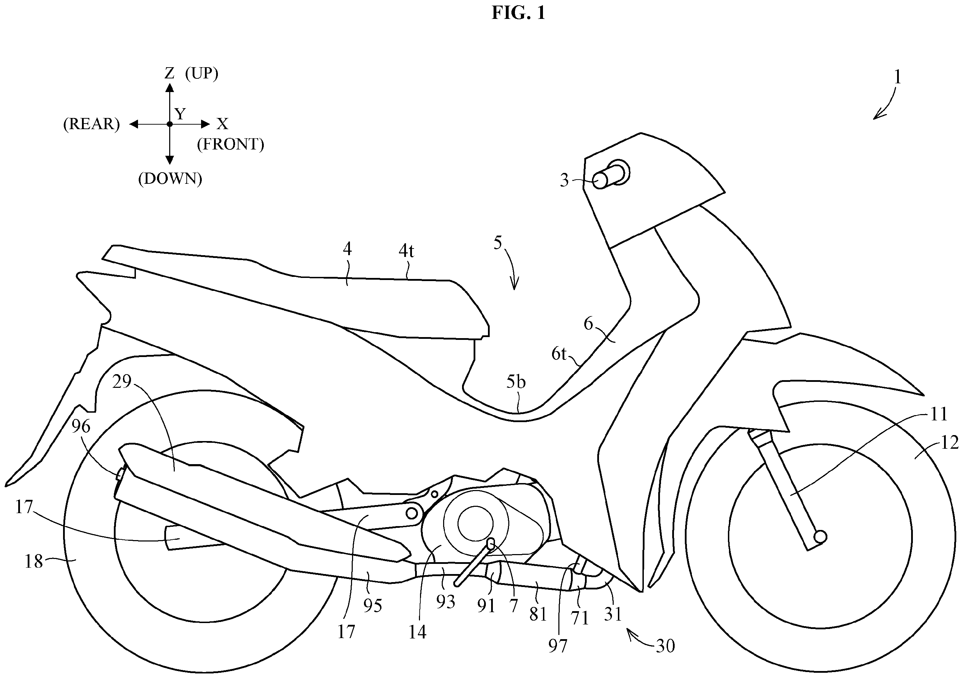

Fig. 1 is a right side view of a straddled vehicle 1 according to one embodiment. The straddled vehicle 1 is classified as an under bone type vehicle, for example. The under bone type vehicle is also called a moped type vehicle. The straddled vehicle 1 is a two-wheeled motor vehicle of an under bone type, for example.

Fig. 1 shows a longitudinal direction X, a transverse direction Y, and an up-down direction Z of the straddled vehicle 1. The longitudinal direction X, transverse direction Y, and up-down direction Z are defined with reference to a driver (also called a rider) mounted on the straddled vehicle 1. The longitudinal direction X, transverse direction Y, and up-down direction Z are perpendicular to one another. The longitudinal direction X and transverse direction Y are horizontal. The up-down direction Z is vertical.

The terms "forward", "rearward", "upward", "downward", "rightward", and "leftward", respectively, mean "forward", "rearward", "upward", "downward", "rightward", and "leftward" as seen from the driver mounted on the straddled vehicle 1. Unless otherwise stated in this specification, "forward" and "rearward" include not only directions parallel to the longitudinal direction X but also directions close to the longitudinal direction X. The directions close to the longitudinal direction X are, for example, directions at angles not exceeding 45 degrees to the longitudinal direction X. Similarly, unless otherwise specified, "rightward" and "leftward" include not only directions parallel to the transverse direction Y but also directions close to the transverse direction Y. Unless otherwise specified, "upward" and "downward" include not only directions parallel to the up-down direction Z but also directions close to the up-down direction Z. For reference, the drawings show the terms FRONT, REAR, UP, DOWN, RIGHT, and LEFT, as appropriate.

It is to be understood that, in this specification, various expressions describing arrangements have the following meanings, respectively. The following description will be made taking the transverse direction Y for example, and the same may apply to the longitudinal direction X and up-down direction Z.

The expression "Member Ma is located more rightward/leftward than Member Mb," defines a position in the transverse direction Y of Member Ma relative to Member Mb, and does not define a position in the longitudinal direction X or the up-down direction Z of Member Ma relative to Member Mb. In the case of this expression, Member Ma may, or may not, overlap Member Mb in a side view of the straddled vehicle 1.

The expression "Member Ma is located rightward/leftward of Member Mb," without reference to a looking direction defines a position in the transverse direction Y of Member Ma relative to Member Mb, a position in the longitudinal direction X of Member Ma relative to Member Mb, and a position in the up-down direction Z of Member Ma relative to Member Mb. This expression means that Member Ma is located more rightward/leftward than Member Mb, and that at least part of Member Ma overlaps at least part of Member Mb in a side view of the straddled vehicle 1.

The expression "Member Ma is located rightward/leftward of Member Mb in plan view of the straddled vehicle 1," defines a position in the transverse direction Y of Member Ma relative to Member Mb, and a position in the longitudinal direction X of Member Ma relative to Member Mb, and does not define a position in the up-down direction Z of Member Ma relative to Member Mb. This expression means that Member Ma is located more rightward/leftward than Member Mb, that a front end of Member Ma is positioned more forward than a rear end of Member Mb, and that a rear end of Member Ma is located more rearward than a front end of Member Mb.

The expression "Member Ma is located rightward/leftward of Member Mb in front view of the straddled vehicle 1," defines a position in the transverse direction Y of Member Ma relative to Member Mb, and a position in the up-down direction Z of Member Ma relative to Member Mb, and does not define a position in the longitudinal direction X of Member Ma relative to Member Mb. This expression means that Member Ma is located more rightward/leftward than Member Mb, that an upper end of Member Ma is positioned higher than a lower end of Member Mb, and that a lower end of Member Ma is located lower than an upper end of Member Mb.

In the present specification, the language "in side view of the straddled vehicle 1" is referred to as "in side view of the vehicle", as appropriate. Likewise, the language "in plan view of the straddled vehicle 1" is referred to as "in plan view of the vehicle", as appropriate. The language "in bottom view of the straddled vehicle 1" is referred to as "in bottom view of the vehicle", as appropriate.

The straddled vehicle 1 includes a handlebar 3 and a seat 4. The handlebar 3 is located in a front part of the straddled vehicle 1. The seat 4 is located more rearward than the handlebar 3. The entire of the seat 4 is located more rearward than the entire of the handlebar 3.

The straddled vehicle 1 forms a recessed space 5. The recessed space 5 is positioned more rearward than the handlebar 3 and more forward than the seat 4 in the side view of the vehicle. At least part of the recessed space 5 is positioned more rearward than the entire of the handlebar 3 and more forward than the entire of the seat 4 in the side view of the vehicle. The recessed space 5 is opened upward in the side view of the vehicle. The recessed space 5 is recessed downward in the side view of the vehicle. The recessed space 5 is recessed lower than the seat 4 in the side view of the vehicle. The recessed space 5 extends to a position lower than the entire of the seat 4.

Specifically, the seat 4 has an upper edge 4t in the side view of the vehicle. The recessed space 5 has a lower edge 5b in the side view of the vehicle. The lower edge 5b is positioned more rearward than the handlebar 3 and more forward than the seat 4 in the side view of the vehicle. At least part of the lower edge 5b is positioned more rearward than the entire of the handlebar 3 and more forward than the entire of the seat 4 in the side view of the vehicle. The lower edge 5b is lower than the upper edge 4t in the side view of the vehicle. At least part of the lower edge 5b is lower than the entire of the upper edge 4t in the side view of the vehicle.

The straddled vehicle 1 includes a center cover 6. At least part of the center cover 6 is located more rearward than the handlebar 3 and more forward than the seat 4. At least part of the center cover 6 is located more rearward than the entire of the handlebar 3 and more forward than the entire of the seat 4. The center cover 6 defines the recessed space 5 in the side view of the vehicle. Specifically, the center cover 6 has an upper edge 6t in the side view of the vehicle. The upper edge 6t is located at a position substantially same as a position of the lower edge 5b in the side view of the vehicle. The upper edge 6t defines the lower edge 5b in the side view of the vehicle.

The straddled vehicle 1 includes a foot bar 7. The foot bar 7 is located lower than the seat 4. The entire of the foot bar 7 is located lower than the entire of the seat 4. The foot bar 7 is located lower than the recessed space 5. The entire of the foot bar 7 is located lower than the entire of the recessed space 5. The foot bar 7 is located lower than the lower edge 5b in the side view of the vehicle. The entire of the foot bar 7 is located lower than the entire of the lower edge 5b in the side view of the vehicle. The foot bar 7 has a bar or rod shape. The foot bar 7 extends in the transverse direction Y.

A driver of the straddled vehicle 1 grips the handlebar 3. The driver sits on the seat 4. The driver puts driver's feet on the foot bar 7. The recessed space 5 allows the driver to get on and off the straddled vehicle 1 easily. For example, the driver can get on and off the straddled vehicle 1 easily by inserting the driver's legs into the recessed space 5.

The straddled vehicle 1 has a front fork 11 and a front wheel 12. The front fork 11 is coupled to the handlebar 3. The front fork 11 extends downward and forward from the handlebar 3. The front wheel 12 is supported by a lower part of the front fork 11.

The straddled vehicle 1 includes an engine 14. The engine 14 generates power. The engine 14 discharges exhaust gases. The engine 14 is located more rearward than the front wheel 12. The entire of the engine 14 is located more rearward than the entire of the front wheel 12. The engine 14 is located lower than the seat 4. At least part of the engine 14 is located lower than the entire of the seat 4.

The straddled vehicle 1 includes a rear arm 17 and a rear wheel 18. The rear arm 17 and the rear wheel 18 are each located lower than the seat 4. At least part of the rear arm 17 is located lower than the entire of the seat 4. At least part of the rear wheel 18 is located lower than the entire of the seat 4. The rear arm 17 extends rearward. The rear wheel 18 is supported at a rear part of the rear arm 17. The rear wheel 18 is located more rearward than the engine 14. At least part of the rear wheel 18 is located more rearward than the entire of the engine 14.

The straddled vehicle 1 includes an exhaust system 30. The exhaust system 30 guides exhaust gases of the engine 14.

The exhaust system 30 is located lower than the seat 4. At least part of the exhaust system 30 is located lower than the entire of the seat 4. The exhaust system 30 extends rearward. The exhaust system 30 overlaps the rear arm 17 in the side view of the vehicle, for example. The exhaust system 30 overlaps the rear wheel 18 in the side view of the vehicle, for example.

The straddled vehicle 1 includes a cover 29. The cover 29 overlaps part of the exhaust system 30 in the side view of the vehicle.

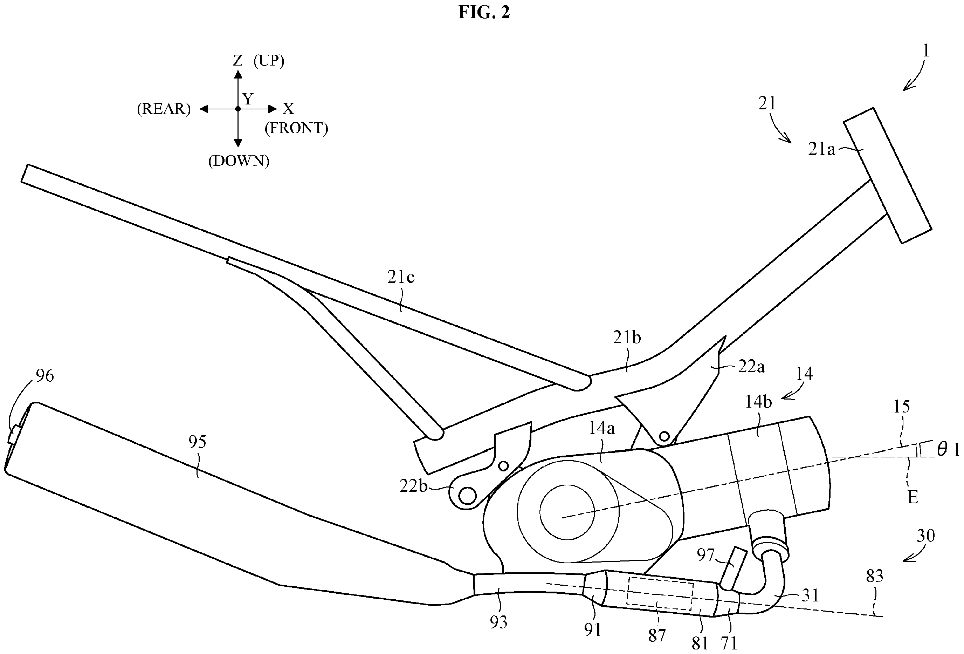

Fig. 2 is a right side view of the straddled vehicle 1 according to one embodiment. Fig. 2 omits illustration of the seat 4, the center cover 6, the cover 29, and the like for convenience. The straddled vehicle 1 includes a vehicle body frame 21. The vehicle body frame 21 supports the engine 14. The vehicle body frame 21 supports the seat 4, the front fork 11, the rear arm 17, and the exhaust system 30, which illustration is omitted.

The vehicle body frame 21 includes a head tube 21a, a main frame 21b, and a seat frame 21c, for example. The head tube 21a supports the front fork 11. The main frame 21b extends rearward and downward from the head tube 21a. The main frame 21b supports the engine 14 and the rear arm 17. The seat frame 21c extends rearward and upward from the main frame 21b. The seat frame 21c supports the seat 4.

The straddled vehicle 1 includes brackets 22a and 22b. The brackets 22a and 22b are each supported by the main frame 21b. The brackets 22a and 22b each support the engine 14.

The engine 14 is fixed to the vehicle body frame 21. The engine 14 cannot rock relative to the vehicle body frame 21. The engine 14 is not swingable relative to the vehicle body frame 21. The engine 14 is classified as a rigid mount engine.

The engine 14 has a cylinder axis 15. The cylinder axis 15 is an imaginary line. The cylinder axis 15 extends in the longitudinal direction X. The cylinder axis 15 is closer to the longitudinal direction X than the up-down direction Z in the side view of the vehicle. For example, the cylinder axis 15 is substantially horizontal in the side view of the vehicle.

Fig. 2 shows an angle θ1. The angle θ1 is an angle formed between the cylinder axis 15 and an imaginary line E in the side view of the vehicle. The imaginary line E is an imaginary straight line. The imaginary line E is parallel to the longitudinal direction X in the side view of the vehicle. The angle θ1 is less than 45 degrees.

The engine 14 includes a crankcase 14a and a cylinder unit 14b, for example. The cylinder unit 14b is connected to the crankcase 14a. The cylinder unit 14b extends forward from the crankcase 14a. The cylinder unit 14b extends over the cylinder axis 15. The cylinder unit 14b includes a cylinder member, a cylinder head, and a head cover, for example.

The engine 14 includes a cylinder not shown. The cylinder is a space. The cylinder is positioned inside of the engine 14. The cylinder is positioned inside of the cylinder unit 14b. The cylinder extends over the cylinder axis 15. The cylinder axis 15 passes the center of the cylinder. Part of the cylinder is used as a combustion chamber not shown.

The exhaust system 30 is fixed to the engine 14. The exhaust system 30 also cannot rock relative to the vehicle body frame 21. The exhaust system 30 is also not swingable relative to the vehicle body frame 21.

The exhaust system 30 is connected to the engine 14. Specifically, the exhaust system 30 is connected to the cylinder unit 14b. The exhaust system 30 is in communication with the combustion chamber. The exhaust system 30 extends rearward from the engine 14.

The exhaust system 30 includes a first exhaust pipe 31, an enlarged portion 71, a housing portion 81, a catalyst 87, a second exhaust pipe 93, and a muffler 95. The first exhaust pipe 31 is connected to the engine 14. Specifically, the first exhaust pipe 31 is connected to the cylinder unit 14b. The enlarged portion 71 is connected to the first exhaust pipe 31. The housing portion 81 is connected to the enlarged portion 71. The housing portion 81 is wider than the first exhaust pipe 31. The catalyst 87 is arranged inside of the housing portion 81. The entire of the catalyst 87 is arranged inside of the housing portion 81. The second exhaust pipe 93 is connected to the housing portion 81. The muffler 95 is connected to the second exhaust pipe 93.

The housing portion 81 is arranged outside of the muffler 95. The entire of the housing portion 81 is arranged outside of the muffler 95. The housing portion 81 is not arranged inside of the muffler 95.

The catalyst 87 is arranged outside of the muffler 95. The entire of the catalyst 87 is arranged outside of the muffler 95. The catalyst 87 is not arranged inside of the muffler 95.

The exhaust system 30 further includes a reduced portion 91. The reduced portion 91 joins the housing portion 81 to the second exhaust pipe 93. The second exhaust pipe 93 is narrower than the housing portion 81.

The first exhaust pipe 31 extends downward from the engine 14 in the side view of the vehicle. Then, the first exhaust pipe 31 is curved and extends rearward in the side view of the vehicle. An enlarged portion 71 extends rearward from the first exhaust pipe 31 in the side view of the vehicle. A housing portion 81 extends rearward from the enlarged portion 71 in the side view of the vehicle. A reduced portion 91 extends rearward from the housing portion 81 in the side view of the vehicle. A second exhaust pipe 93 extends rearward from the reduced portion 91 in the side view of the vehicle. The muffler 95 extends rearward from the second exhaust pipe 93 in the side view of the vehicle. The entire of the muffler 95 is located more rearward than the housing portion 81 in the longitudinal direction X. The entire of the muffler 95 is located more rearward than the entire of the housing portion 81 in the longitudinal direction X. The entire of the catalyst 87 is located more forward than the entire of the muffler 95 in the longitudinal direction X.

The housing portion 81 has a central axis 83. The central axis 83 is an imaginary straight line. The central axis 83 passes the center of the housing portion 81. The housing portion 81 extends over the central axis 83. The central axis 83 extends in the longitudinal direction X in the side view of the vehicle. The central axis 83 is closer to the longitudinal direction X than the up-down direction Z in the side view of the vehicle. For example, the central axis 83 is substantially parallel to the longitudinal direction X in the side view of the vehicle. For example, the central axis 83 is substantially horizontal in the side view of the vehicle.

The muffler 95 is wider than the second exhaust pipe 93. The muffler 95 is wider than the housing portion 81. The muffler 95 is longer than the housing portion 81. A length of the muffler 95 in the longitudinal direction X is larger than a length of the housing portion 81 in the longitudinal direction X.

The muffler 95 is configured to reduce noises of exhaust gases. The muffler 95 is also called a silencer. The muffler 95 forms an expansion chamber, for example, which illustration is omitted. The expansion chamber is a space. The expansion chamber is positioned inside of the muffler 95.

The muffler 95 includes an outlet 96. The outlet 96 is opened toward outside of the straddled vehicle 1. The outlet 96 is positioned at a rear end of the muffler 95, for example.

The exhaust system 30 includes an upstream oxygen sensor 97. The upstream oxygen sensor 97 is attached to the enlarged portion 71, for example. The upstream oxygen sensor 97 is arranged outside of the muffler 95. The entire of the upstream oxygen sensor 97 is arranged outside of the muffler 95. The upstream oxygen sensor 97 detects an oxygen concentration in the exhaust gases. The upstream oxygen sensor 97 detects the oxygen concentration of the exhaust gases upstream of the catalyst 87.

The straddled vehicle 1 includes an electronic control unit not shown. The electronic control unit is called an ECU as appropriate. The upstream oxygen sensor 97 is electrically connected to the ECU. The ECU obtains detection results of the upstream oxygen sensor 97.

Reference is made to Fig. 1. The cover 29 overlaps the muffler 95 in the side view of the vehicle. The cover 29 protects the muffler 95.

Reference is made to Figs. 1 and 2. The following describes an exhaust gas flow. Exhaust gases are generated in the engine 14. Specifically, the exhaust gases are generated in the combustion chamber. The exhaust gases flow from the engine 14 to the first exhaust pipe 31. The exhaust gases flow from the cylinder unit 14b to the first exhaust pipe 31. The exhaust gases flow from the first exhaust pipe 31 to the enlarged portion 71. The upstream oxygen sensor 97 detects an oxygen concentration of exhaust gases in the enlarged portion 71. The exhaust gases flow from the enlarged portion 71 to the housing portion 81. The exhaust gases pass through the catalyst 87 in the housing portion 81. The catalyst 87 purifies the exhaust gases in the housing portion 81. After passing through the catalyst 87, the exhaust gases flow from the housing portion 81 to the reduced portion 91. The exhaust gases flow from the reduced portion 91 to the second exhaust pipe 93. The exhaust gases flow from the second exhaust pipe 93 to the muffler 95. The exhaust gases pass through the expansion chamber in the muffler 95. When the exhaust gases enter the expansion chamber, the exhaust gases expand. The exhaust gases are discharged from the muffler 95 to the outside of the straddled vehicle 1 through the outlet 96.

The first exhaust pipe 31 is located downstream of the engine 14 in the direction of the exhaust gas flow. The entire of the first exhaust pipe 31 is located downstream of the entire of the engine 14 in the direction of the exhaust gas flow.

The enlarged portion 71 and the upstream oxygen sensor 97 are each located downstream of the first exhaust pipe 31 in the direction of the exhaust gas flow.

The housing portion 81 and the catalyst 87 are each located downstream of the engine 14 in the direction of the exhaust gas flow. The entire of the housing portion 81 and the entire of the catalyst 87 are located downstream of the entire of the engine 14 in the direction of the exhaust gas flow. The housing portion 81 and the catalyst 87 are each located downstream of the first exhaust pipe 31 in the direction of the exhaust gas flow. The entire of the housing portion 81 and the entire of the catalyst 87 are located downstream of the entire of the first exhaust pipe 31 in the direction of the exhaust gas flow. The housing portion 81 and the catalyst 87 are each located downstream of the enlarged portion 71 in the direction of the exhaust gas flow. The entire of the housing portion 81 and the entire of the catalyst 87 are located downstream of the entire of the enlarged portion 71 in the direction of the exhaust gas flow. The housing portion 81 and the catalyst 87 are each located downstream of the upstream oxygen sensor 97 in the direction of the exhaust gas flow. The entire of the housing portion 81 and the entire of the catalyst 87 are located downstream of the entire of the upstream oxygen sensor 97 in the direction of the exhaust gas flow.

The housing portion 81 and the catalyst 87 are each located upstream of the reduced portion 91 in the direction of the exhaust gas flow. The entire of the housing portion 81 and the entire of the catalyst 87 are located upstream of the entire of the reduced portion 91 in the direction of the exhaust gas flow. The housing portion 81 and the catalyst 87 are each located upstream of the second exhaust pipe 93 in the direction of the exhaust gas flow. The entire of the housing portion 81 and the entire of the catalyst 87 are located upstream of the entire of the second exhaust pipe 93 in the direction of the exhaust gas flow. The housing portion 81 and the catalyst 87 are each located upstream of the muffler 95 in the direction of the exhaust gas flow. The entire of the housing portion 81 and the entire of the catalyst 87 are located upstream of the entire of the muffler 95 in the direction of the exhaust gas flow.

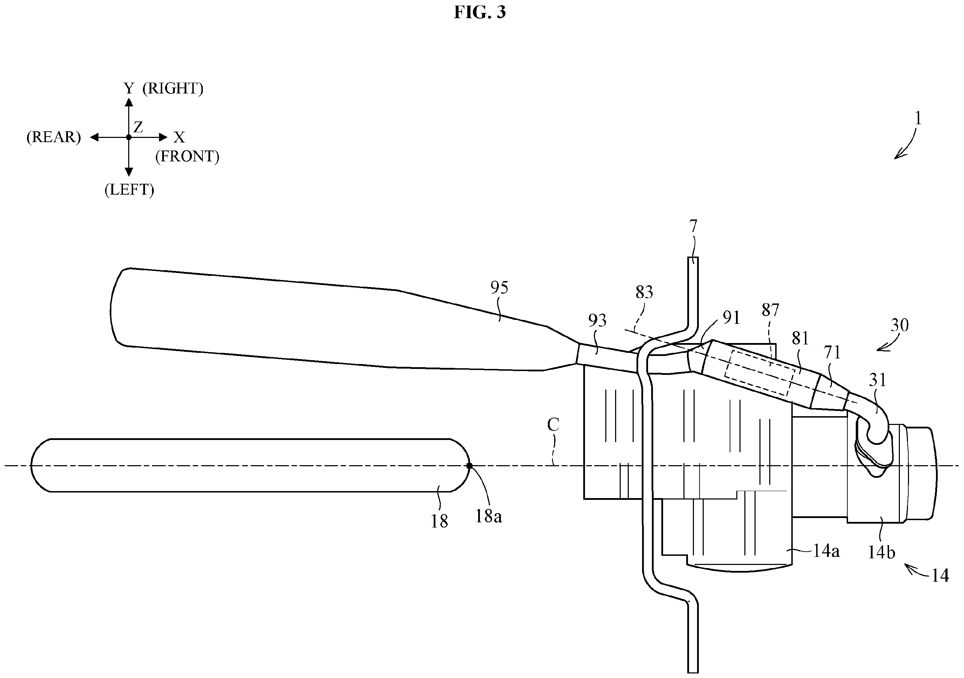

Fig. 3 is a partial bottom view of the straddled vehicle 1 according to the embodiment. Fig. 3 shows a vehicle center plane C. The vehicle center plane C is an imaginary plane orthogonal to the transverse direction Y. The vehicle center plane C passes through the center of the straddled vehicle 1 in the transverse direction Y. The vehicle center plane C passes the center 18a of the rear wheel 18 in the transverse direction Y, for example.

The engine 14 intersects with the vehicle center plane C. For example, the vehicle center plane C includes a cylinder axis 15.

The entire of the housing portion 81 is located more rightward than the vehicle center plane C. The housing portion 81 does not intersect with the vehicle center plane C.

The entire of the catalyst 87 is located more rightward than the vehicle center plane C. The catalyst 87 does not intersect with the vehicle center plane C.

The entire of the exhaust system 30 is located more rightward than the vehicle center plane C. The exhaust system 30 does not intersect with the vehicle center plane C.

The housing portion 81 extends rearward from the enlarged portion 71 in the bottom view of the vehicle.

The central axis 83 of the housing portion 81 extends in the longitudinal direction X in the bottom view of the vehicle. The central axis 83 is closer to the longitudinal direction X than the transverse direction Y in the bottom view of the vehicle. For example, the central axis 83 is substantially parallel to the longitudinal direction X in the bottom view of the vehicle.

### <2. Outline of exhaust system 30>

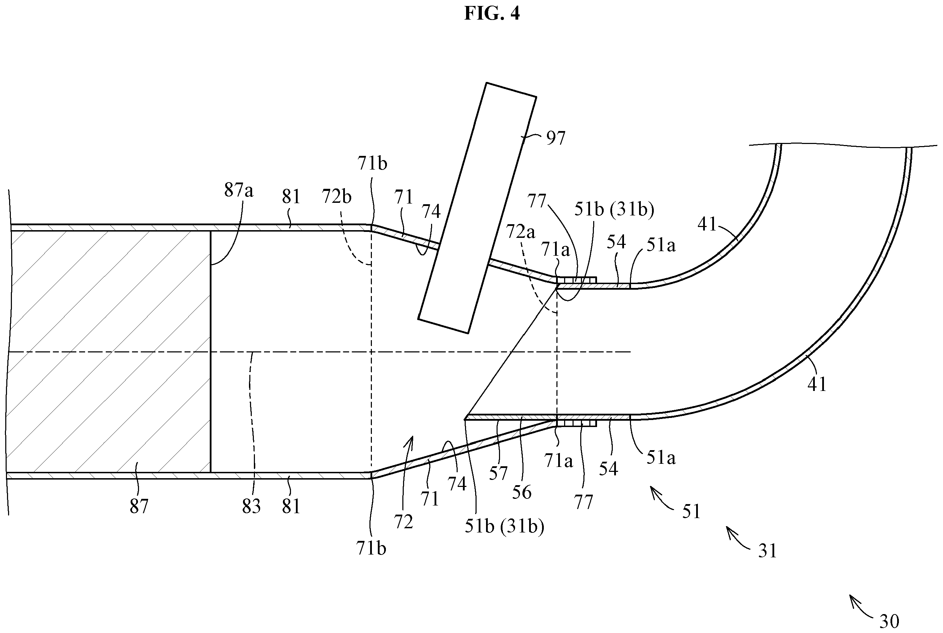

Fig. 4 is a partial sectional view of the exhaust system 30. The first exhaust pipe 31 includes one curved portion 41. The curved portion 41 is curved. The curved portion 41 extends in a curve shape. The entire of the curved portion 41 is positioned outside of the enlarged portion 71.

The first exhaust pipe 31 includes a straight portion 51. The straight portion 51 contacts the curved portion 41. The straight portion 51 extends linearly from the curved portion 41. The straight portion 51 is connected to the enlarged portion 71.

The enlarged portion 71 has an upstream end 71a and a downstream end 71b. The upstream end 71a is connected to the straight portion 51. The downstream end 71b is connected to the housing portion 81.

The enlarged portion 71 forms a flow path 72. The flow path 72 is a space. The flow path 72 is positioned inside of the enlarged portion 71. The flow path 72 extends from the upstream end 71a to the downstream end 71b. The flow path 72 enlarges from the upstream end 71a to the downstream end 71b.

The flow path 72 has a cross sectional face 72a at the upstream end 71a and a cross sectional face 72b at the downstream end 71b. The cross sectional face 72b is larger than the cross sectional face 72a.

The straight portion 51 is inserted from outside of the enlarged portion 71 into inside of the enlarged portion 71 through the upstream end 71a. In other words, the straight portion 51 is inserted from outside of the enlarged portion 71 into the flow path 72 through the upstream end 71a. The straight portion 51 protrudes inside of the enlarged portion 71.

Specifically, the straight portion 51 has an upstream end 51a and a downstream end 51b. The straight portion 51 extends over a straight line connecting the upstream end 51a and the downstream end 51b. The upstream end 51a contacts the curved portion 41. The upstream end 51a is located outside of the enlarged portion 71. The entire of the upstream end 51a is located outside of the enlarged portion 71. The downstream end 51b is located inside of the enlarged portion 71. The entire of the downstream end 51b is located inside of the enlarged portion 71, for example. The downstream end 51b is opened to the inside of the enlarged portion 71. The downstream end 51b is opened to the flow path 72.

The downstream end 51b corresponds to a downstream end 31b of the first exhaust pipe 31.

More specifically, the straight portion 51 has a first section 54 and a second section 56. The first section 54 is positioned outside of the enlarged portion 71. The entire of the first section 54 is positioned outside of the enlarged portion 71. The first section 54 has the upstream end 51a. The first section 54 contacts the curved portion 41. The second section 56 contacts the first section 54. The second section 56 is positioned inside of the enlarged portion 71. The entire of the second section 56 is positioned inside of the enlarged portion 71. The second section 56 has the downstream end 51b.

The enlarged portion 71 does not accommodate the first section 54. The enlarged portion 71 accommodates the second section 56. The enlarged portion 71 accommodates the entire of the second section 56. The upstream end 71a of the enlarged portion 71 is arranged on a boundary between the first section 54 and the second section 56.

At least part of the downstream end 51b is apart from the enlarged portion 71. At least part of the downstream end 51b does not contact the enlarged portion 71. At least part of the downstream end 51b does not continue to the enlarged portion 71.

The enlarged portion 71 includes an inner surface 74. At least part of the downstream end 51b is apart from the inner surface 74. At least part of the downstream end 51b does not contact the inner surface 74. At least part of the downstream end 51b does not continue to the inner surface 74.

The second section 56 protrudes from the inner surface 74. The straight portion 51 protrudes from the inner surface 74.

At least part of the second section 56 is apart from the enlarged portion 71. At least part of the second section 56 does not contact the enlarged portion 71. At least part of the second section 56 does not continue to the enlarged portion 71.

The second section 56 has an outer surface 57. At least part of the outer surface 57 is apart from the inner surface 74. At least part of the outer surface 57 does not contact the inner surface 74. At least part of the outer surface 57 does not continue to the inner surface 74.

The catalyst 87 is arranged outside of the enlarged portion 71. The entire of the catalyst 87 is arranged outside of the enlarged portion 71.

The catalyst 87 intersects with a central axis 83. The catalyst 87 is located on the central axis 83. The catalyst 87 extends over the central axis 83, for example.

The catalyst 87 has an inlet face 87a. The inlet face 87a is a part of the catalyst 87 through which the exhaust gases enter the catalyst 87. The inlet face 87a corresponds to the upstream end of the catalyst 87.

The inlet face 87a intersects with the central axis 83. The inlet face 87a is perpendicular to the central axis 83, for example.

The straight portion 51 extends toward the catalyst 87. The straight portion 51 extends toward the catalyst 87 within the enlarged portion 71. The straight portion 51 protrudes toward the catalyst 87 within the enlarged portion 71.

The straight portion 51 extends from the upstream end 51a to the downstream end 51b. A direction from the upstream end 51a to the downstream end 51b is a direction toward the catalyst 87.

The straight portion 51 substantially extends over the central axis 83.

The straight portion 51 extends toward the inlet face 87a. The straight portion 51 extends toward the inlet face 87a within the enlarged portion 71.

A direction from the upstream end 51a to the downstream end 51b is a direction toward the inlet face 87a. A direction from the upstream end 51a to the downstream end 51b is a direction perpendicular to the inlet face 87a, for example.

The following describes an exhaust gas flow. Exhaust gases flow from the curved portion 41 to the straight portion 51. The exhaust gases flow in the straight portion 51. Specifically, the exhaust gases flow from the first section 54 to the second section 56. The exhaust gases are discharged from the second section 56. In other words, the exhaust gases are discharged from the straight portion 51 through the downstream end 51b. The exhaust gases are discharged from the first exhaust pipe 31 through the downstream end 51b. The exhaust gases enter the enlarged portion 71 from the first exhaust pipe 31 through the downstream end 51b. The exhaust gases flow in the enlarged portion 71. Specifically, the exhaust gases flow in the flow path 72. The exhaust gases flow toward the downstream end 71b within the enlarged portion 71. The exhaust gases enter the housing portion 81 from the enlarged portion 71 through the downstream end 71b. Then, the exhaust gases pass through the catalyst 87. That is, after flowing out of the enlarged portion 71, the exhaust gases enter the catalyst 87. The exhaust gases do not enter the catalyst 87 before the exhaust gases flow out of the enlarged portion 71. After entering the housing portion 81, the exhaust gases enter the catalyst 87. The exhaust gases enter the catalyst 87 through the inlet face 87a.

The straight portion 51 is positioned downstream of the curved portion 41 in the direction of the exhaust gas flow. The entire of the straight portion 51 is positioned downstream of the entire of the curved portion 41 in the direction of the exhaust gas flow.

The upstream end 51a of the straight portion 51 is positioned upstream of the upstream end 71a of the enlarged portion 71 in the direction of the exhaust gas flow. The entire of the upstream end 51a is positioned upstream of the entire of the upstream end 71a in the direction of the exhaust gas flow.

The downstream end 51b of the straight portion 51 is positioned downstream of the upstream end 71a in the direction of the exhaust gas flow. At least part of the downstream end 51b is positioned downstream of the entire of the upstream end 71a in the direction of the exhaust gas flow.

The entire of the downstream end 51b is positioned upstream of the downstream end 71b of the enlarged portion 71 in the direction of the exhaust gas flow. The entire of the downstream end 51b is positioned upstream of the entire of the downstream end 71b of the enlarged portion 71 in the direction of the exhaust gas flow. The entire of the straight portion 51 is positioned upstream of the downstream end 71b in the direction of the exhaust gas flow. The entire of the straight portion 51 is positioned upstream of the entire of the downstream end 71b in the direction of the exhaust gas flow.

The catalyst 87 is located downstream of the curved portion 41 in the direction of the exhaust gas flow. The entire of the catalyst 87 is located downstream of the entire of the curved portion 41 in the direction of the exhaust gas flow.

The catalyst 87 is located downstream of the straight portion 51 in the direction of the exhaust gas flow. The entire of the catalyst 87 is located downstream of the entire of the straight portion 51 in the direction of the exhaust gas flow.

The entire of the catalyst 87 is located downstream of the enlarged portion 71 in the direction of the exhaust gas flow. The entire of the catalyst 87 is located downstream of the entire of the enlarged portion 71 in the direction of the exhaust gas flow. The entire of the catalyst 87 is located downstream of the downstream end 71b in the direction of the exhaust gas flow. The entire of the catalyst 87 is located downstream of the entire of the downstream end 71b in the direction of the exhaust gas flow.

### <3. Details of exhaust system 30>

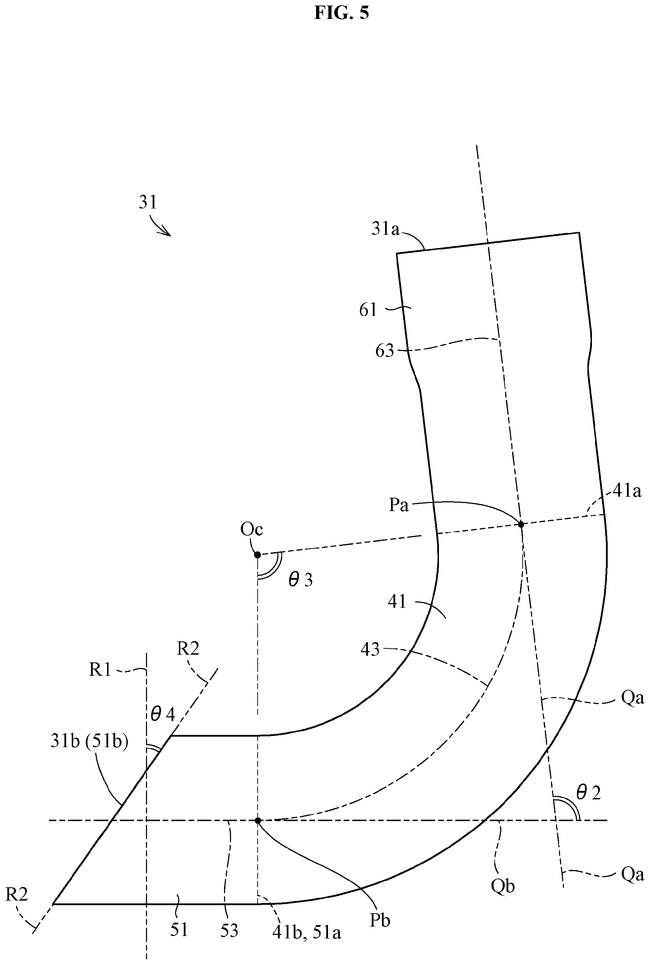

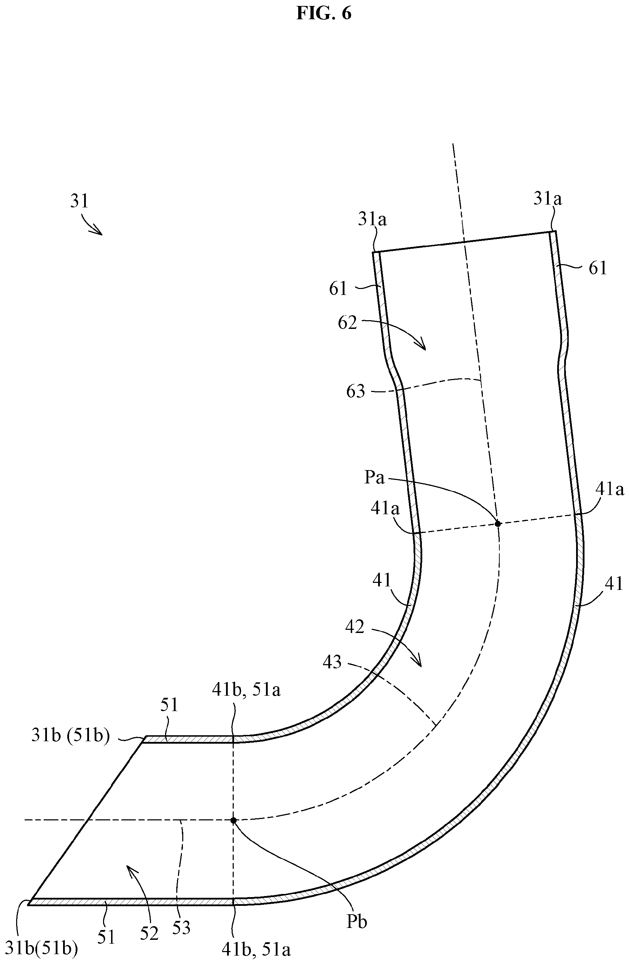

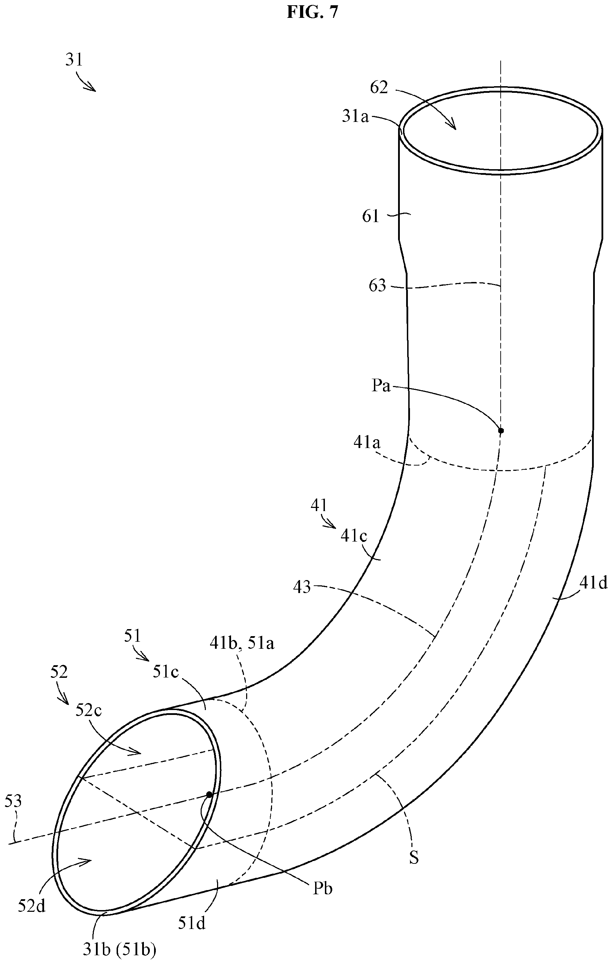

Fig. 5 is a side view of the first exhaust pipe 31. Fig. 6 is a sectional view of the first exhaust pipe 31. Fig. 7 is a perspective view of the first exhaust pipe 31. The first exhaust pipe 31 is a circular pipe, for example.

The first exhaust pipe 31 has an upstream end 31a in addition to the downstream end 31b. The upstream end 31a is joined to the engine 14.

The curved portion 41 has an upstream end 41a and a downstream end 41b. The curved portion 41 extends from the upstream end 41a to the downstream end 41b. The downstream end 41b contacts the straight portion 51. The downstream end 41b contacts the upstream end 51a.

The first exhaust pipe 31 includes an upstream portion 61 in addition to the curved portion 41 and the straight portion 51, for example. The upstream portion 61 is positioned upstream of the curved portion 41 in the direction of the exhaust gas flow. The upstream portion 61 contacts the curved portion 41. The upstream portion 61 contacts the upstream end 41a. The upstream portion 61 extends to the engine 14. The upstream portion 61 is connected to the engine 14. The upstream portion 61 includes the upstream end 31a.

The entire of the upstream portion 61 extends linearly, for example. The upstream portion 61 extends over a straight line connecting the upstream end 31a and the upstream end 41a, for example.

The upstream portion 61, the curved portion 41, and the straight portion 51 are molded integrally. The first exhaust pipe 31 is obtained by bending a straight pipe, for example.

The upstream portion 61 forms a flow path 62. The flow path 62 is positioned inside of the upstream portion 61.

The upstream portion 61 has a central axis 63. The central axis 63 is an imaginary line. The central axis 63 is, for example, a straight line. The central axis 63 passes the center of the flow path 62. The upstream portion 61 extends over the central axis 63.

The curved portion 41 forms a flow path 42. The flow path 42 is positioned inside of the curved portion 41. The flow path 42 contacts the flow path 62. The flow path 42 extends from the upstream end 41a to the downstream end 41b.

The curved portion 41 has a central axis 43. The central axis 43 is an imaginary curve. The central axis 43 passes the center of the flow path 42. The curved portion 41 extends over the central axis 43.

The flow path 42 has a cross sectional face. The cross sectional face of the flow path 42 is perpendicular to the central axis 43. The cross sectional face of the flow path 42 has a circular shape, for example.

Fig. 5 shows an angle θ2. The angle θ2 is an angle formed by a tangent line Qa and a tangent line Qb. The tangent lines Qa and Qb are each an imaginary straight line. The tangent line Qa contacts the central axis 43 at a point Pa. The tangent line Qb contacts the central axis 43 at a point Pb. The points Pa and Pb are each on the central axis 43. The point Pa is positioned on the cross sectional face of the flow path 42 at the upstream end 41a. The point Pa is an intersection of the central axis 43 and the cross sectional face of the flow path 42 at the upstream end 41a. The point Pb is positioned on the cross sectional face of the flow path 42 at the downstream end 41b. The point Pb is an intersection of the central axis 43 and the cross sectional face of the flow path 42 at the downstream end 41b. The angle θ2 is also called a bent angle of the curved portion 41. The angle θ2 is also called a bending angle of the curved portion 41. The angle θ2 is 45 degrees or larger. That is, the curved portion 41 is curved at the angle θ2 of 45 degrees or more. In the present embodiment, the angle θ2 is 90 degrees or larger, for example.

The curved portion 41 is curved in an arc shape, for example. The central axis 43 is, for example, an arc. The central axis 43 is, for example, an arc with a curvature center Oc as the center.

Fig. 5 shows a central angle θ3 of the central axis 43. The central angle θ3 is 45 degrees or larger. That is, the central axis 43 is an arc having the central angle θ3 of 45 degrees or more. In other words, the curved portion 41 is curved at the central angle θ3 of 45 degrees or more. In the present embodiment, the central angle θ3 is 90 degrees or larger, for example.

The straight portion 51 forms a flow path 52. The flow path 52 is positioned inside of the straight portion 51. The flow path 52 contacts the flow path 42. The flow path 52 extends from the upstream end 51a to the downstream end 51b.

The straight portion 51 has a central axis 53. The central axis 53 is an imaginary straight line. The central axis 53 passes the center of the flow path 52. The straight portion 51 extends over the central axis 53.

The flow path 52 has a cross sectional face. The cross sectional face of the flow path 52 is perpendicular to the central axis 53. The cross sectional face of the flow path 52 has a circular shape, for example.

The tangent line Qa described above conforms to the central axis 63, for example. The tangent line Qb described above conforms to the central axis 53, for example. The angle θ2 described above is equal to an angle formed by the central axis 53 and the central axis 63, for example.

The downstream end 51b of the straight portion 51 is inclined relative to the central axis 53. The downstream end 51b is tilted relative to the central axis 53. The downstream end 51b is not orthogonal to the central axis 53.

Fig. 5 shows a vertical plane R1. The vertical plane R1 is orthogonal to the central axis 53. The downstream end 51b is inclined relative to the vertical plane R1. That is, the downstream end 51b is not positioned on the vertical plane R1. The entire of the downstream end 51b is not positioned on the vertical plane R1.

Fig. 5 shows a slope plane R2. The slope plane R2 is tilted relative to the vertical plane R1. The slope plane R2 is not orthogonal to the central axis 53. The slope plane R2 is not parallel to the central axis 53. The slope plane R2 is inclined relative to the central axis 53.

Fig. 5 shows an angle θ4. The angle θ4 is an angle formed with the vertical plane R1 and the slope plane R2. The angle θ4 is larger than zero degree. The angle θ4 is smaller than 90 degrees.

The downstream end 51b is positioned on the slope plane R2. The entire of the downstream end 51b is positioned on the slope plane R2.

For example, the downstream end 51b is obtained by cutting the straight pipe along the slope plane R2.

The curved portion 41 and the straight portion 51 are to be described in more detail. Reference is made to Fig. 7. The curved portion 41 has an inner curved portion 41c and an outer curved portion 41d. The straight portion 51 has an inner straight portion 51c and an outer straight portion 51d.

Fig. 7 shows an imaginary line S. The imaginary line S shows a boundary between the inner curved portion 41c and the outer curved portion 41d. The imaginary line S also shows a boundary between the inner straight portion 51c and the outer straight portion 51d.

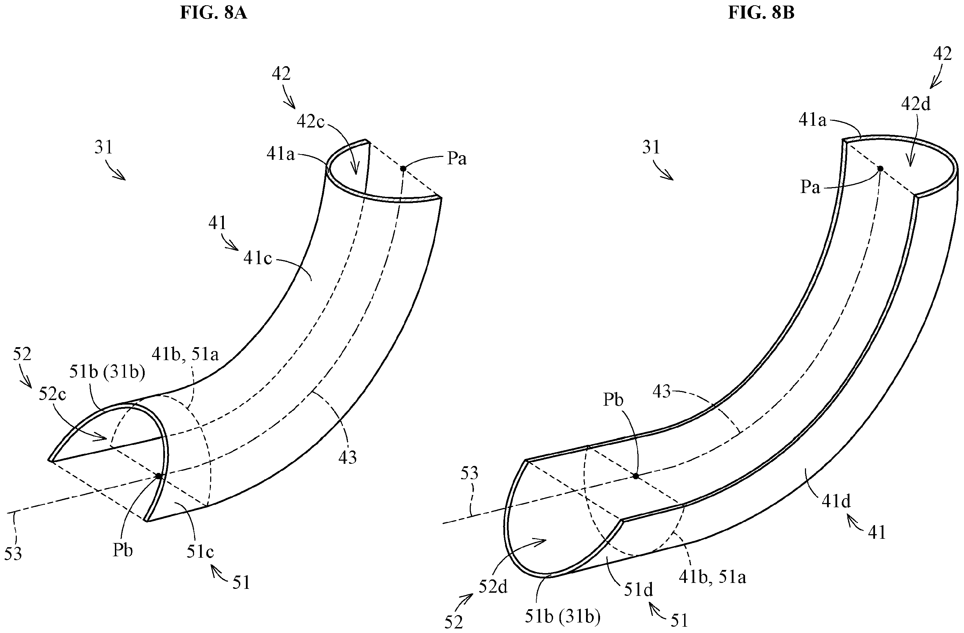

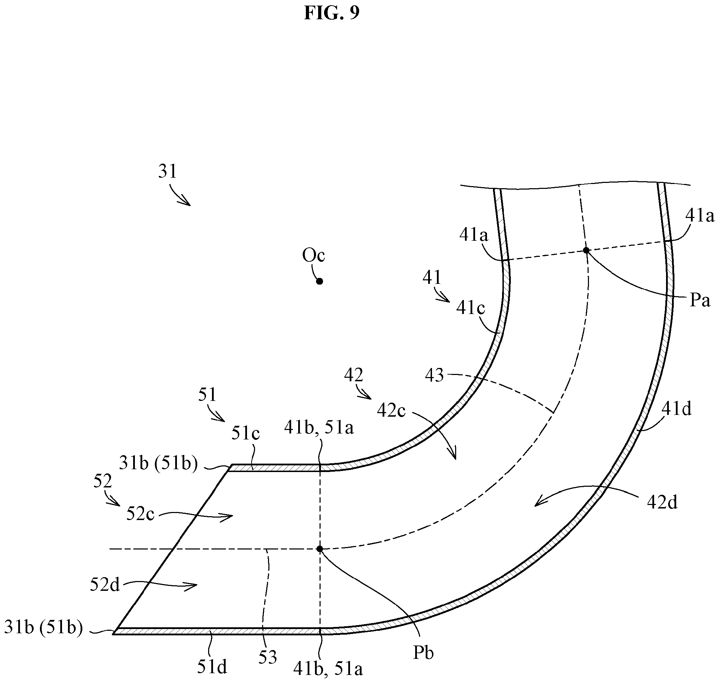

Reference is made to Figs. 7 to 9. Figs. 8A and 8B are each an exploded perspective view of the curved portion 41 and the straight portion 51. Fig. 8A is a perspective view of the inner curved portion 41c and the inner straight portion 51c. Fig. 8B is a perspective view of the outer curved portion 41d and the outer straight portion 51d. Fig. 9 is a sectional view of the curved portion 41 and the straight portion 51. In Fig. 9, the central axis 43 corresponds to the boundary between the inner curved portion 41c and the outer curved portion 41d. In Fig. 9, the central axis 53 corresponds to the boundary between the inner straight portion 51c and the outer straight portion 51d.

The inner curved portion 41c is positioned more inward than the central axis 43. The inner curved portion 41c is positioned more inward than the central axis 43 with the curvature center Oc as a reference. The inner curved portion 41c has a cross sectional face in a U-shape. The inner curved portion 41c extends along the central axis 43. The inner curved portion 41c extends from the upstream end 41a to the downstream end 41b.

The outer curved portion 41d is positioned more outward than the central axis 43. The outer curved portion 41d is positioned more outward than the central axis 43 with the curvature center Oc as a reference. The outer curved portion 41d is positioned more outward than the inner curved portion 41c. The outer curved portion 41d has a cross sectional face in a U-shape. The outer curved portion 41d extends along the central axis 43. The outer curved portion 41d extends from the upstream end 41a to the downstream end 41b. The outer curved portion 41d contacts the inner curved portion 41c.

The flow path 42 has an inner flow path 42c and an outer flow path 42d. The inner flow path 42c is substantially defined by the inner curved portion 41c. The outer flow path 42d is substantially defined by the outer curved portion 41d. The outer flow path 42d is positioned more outward than the inner flow path 42c. The outer flow path 42d is positioned more outward than the inner flow path 42c with the curvature center Oc as a reference. A radius of curvature of the outer flow path 42d is larger than a radius of curvature of the inner flow path 42c.

A cross sectional face of the flow path 42 includes a cross sectional face of the inner flow path 42c and a cross sectional face of the outer flow path 42d. The cross sectional face of the inner flow path 42c has substantially a semicircle shape. The cross sectional face of the outer flow path 42d has substantially a semicircle shape.

The inner straight portion 51c contacts the inner curved portion 41c. The inner straight portion 51c continues to the inner curved portion 41c. The inner straight portion 51c has a cross sectional face in a U-shape. The inner straight portion 51c extends linearly from the inner curved portion 41c. The inner straight portion 51c extends along the central axis 53. The inner straight portion 51c extends from the upstream end 51a to the downstream end 51b.

The outer straight portion 51d contacts the outer curved portion 41d. The outer straight portion 51d continues to the outer curved portion 41d. The outer straight portion 51d has a cross sectional face in a U-shape. The outer straight portion 51d extends linearly from the outer curved portion 41d. The outer straight portion 51d extends along the central axis 53. The outer straight portion 51d extends from the upstream end 51a to the downstream end 51b. The outer straight portion 51d contacts the inner straight portion 51c.

The flow path 52 has an inner flow path 52c and an outer flow path 52d. The inner flow path 52c is substantially defined by the inner straight portion 51c. The outer flow path 52d is substantially defined by the outer straight portion 51d.

A cross sectional face of the flow path 52 includes a cross sectional face of the inner flow path 52c and a cross sectional face of the outer flow path 52d. The cross sectional face of the inner flow path 52c has substantially a semicircle shape. The cross sectional face of the outer flow path 52d has substantially a semicircle shape.

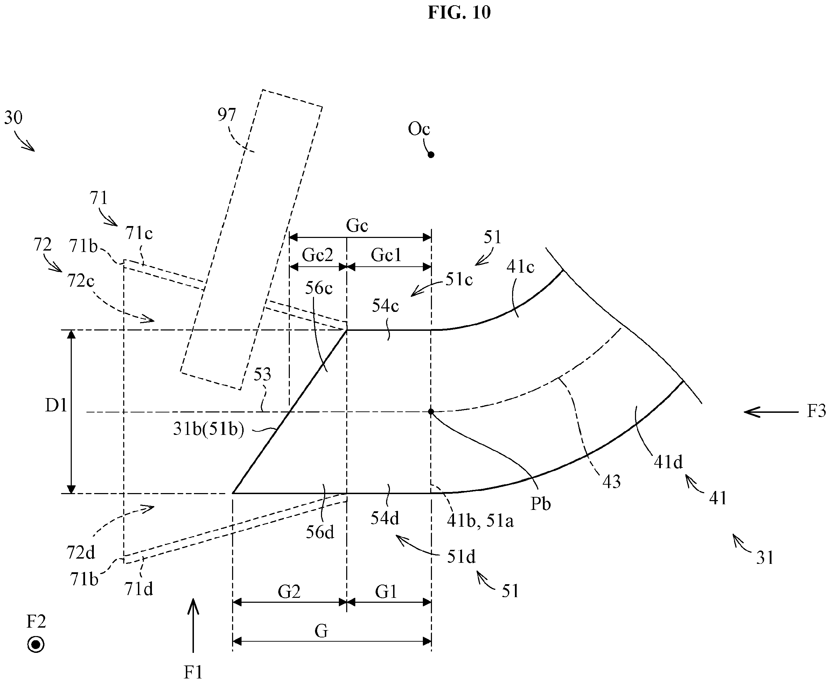

Fig. 10 is a side view of the curved portion 41 and the straight portion 51. As described above, the straight portion 51 includes the first section 54 and the second section 56. Accordingly, the inner straight portion 51c has an inner first section 54c and an inner second section 56c. The inner first section 54c is contained in the first section 54. The inner first section 54c is positioned outside of the enlarged portion 71. The inner second section 56c is contained in the second section 56. The inner second section 56c is positioned inside of the enlarged portion 71. Likewise, the outer straight portion 51d has an outer first section 54d and an outer second section 56d. The outer first section 54d is contained in the first section 54. The outer first section 54d is positioned outside of the enlarged portion 71. The outer second section 56d is contained in the second section 56. The outer second section 56d is positioned inside of the enlarged portion 71.

The straight portion 51 has a diameter D1. The diameter D1 is substantially constant from the upstream end 51a to the downstream end 51b. The diameter D1 is substantially constant along the central axis 53. For example, a diameter D1 at the downstream end 51b is substantially equal to a diameter D1 at the upstream end 51a. For example, the diameter D1 at the downstream end 51b is not smaller than the diameter D1 at the upstream end 51a.

The flow path 52 has a dimension substantially constant from the upstream end 51a to the downstream end 51b.

Fig. 10 shows a length G. The length G is a length of the straight portion 51. More specifically, the length G is a length of the straight portion 51 along the central axis 53.

The length G is larger than half the diameter D 1. For example, the length G is larger than the diameter D1. The length G is less than twice as large as the diameter D 1.

Fig. 10 shows a length G1 and a length G2. The length G1 is a length of the first section 54. The length G2 is a length of the second section 56. More specifically, the length G1 is a length of the first section 54 along the central axis 53. The length G1 corresponds to a length of a flow path of the exhaust gases between the downstream end 41b of the curved portion 41 and the upstream end 71a of the enlarged portion 71. The length G2 is a length of the second section 56 along the central axis 53. The length G is the sum of the length G1 and the length G2. The length G1 is smaller than the length G. The length G2 is smaller than the length G.

The length G2 is, for example, larger than the length G1.

The length G1 is smaller than the diameter D1. The length G1 is larger than half the diameter D1.

The length G2 is smaller than the diameter D1. For example, the length G2 is larger than half the diameter D1.

Here, the length G corresponds to a length of the outer straight portion 51d. The length G1 corresponds to a length of the outer first section 54d. The length G2 corresponds to a length of the outer second section 56d. More specifically, the length G corresponds to a length of the outer straight portion 51d along the central axis 53. The length G1 corresponds to a length of the outer first section 54d along the central axis 53. The length G2 corresponds to a length of the outer second section 56d along the central axis 53.

Fig. 10 shows a length Gc. The length Gc is a length of the inner straight portion 51c. More specifically, the length Gc is a length of the inner straight portion 51c along the central axis 53. The length G is larger than the length Gc. That is, the outer straight portion 51d is longer than the inner straight portion 51c. Accordingly, the outer flow path 52d is longer than the inner flow path 52c.

Fig. 10 shows a length Gc1 and a length Gc2. The length Gc1 is a length of the inner first section 54c. The length Gc2 is a length of the inner second section 56c. More specifically, the length Gc1 is a length of the inner first section 54c along the central axis 53. The length Gc2 is a length of the inner second section 56c along the central axis 53. The length Gc is the sum of the length Gc1 and the length Gc2.

The length G1 is equal to the length Gc1.

The length G2 is larger than the length Gc2. That is, the outer second section 56d is longer than the inner second section 56c.

Fig. 10 shows the enlarged portion 71 by dotted lines for convenience. As described above, the length G is larger than the length Gc. Accordingly, the outer straight portion 51d is further apart from the enlarged portion 71. The outer straight portion 51d is further separated from the enlarged portion 71. Specifically, a separation distance between the outer straight portion 51d and the enlarged portion 71 is larger than a separation distance between the inner straight portion 51c and the enlarged portion 71.

As described above, the length G2 is larger than the length Gc2.
Accordingly, the outer second section 56d is inserted into inside of the enlarged portion 71 more deeply than the inner second section 56c. In other words, the outer second section 56d is inserted into the flow path 72 more deeply than the inner second section 56c. Consequently, the outer second section 56d is further apart from the enlarged portion 71. The outer second section 56d is further separated from the enlarged portion 71. Specifically, a separation distance between the outer second section 56d and the enlarged portion 71 is larger than a separation distance between the inner second section 56c and the enlarged portion 71.

The enlarged portion 71 has an inner enlarged portion 71c and an outer enlarged portion 71d. In Fig. 10, the central axis 53 corresponds to a boundary between the inner enlarged portion 71c and the outer enlarged portion 71d.

The inner enlarged portion 71c is positioned outward of the inner second section 56c. The inner enlarged portion 71c is positioned outward of the inner second section 56c with the central axis 53 as a reference. The inner enlarged portion 71c is not positioned outward of the outer second section 56d. The inner enlarged portion 71c is not positioned outward of the outer second section 56d with the central axis 53 as a reference. The inner enlarged portion 71c has a cross sectional face in a U-shape. The inner enlarged portion 71c extends from a boundary between the inner first section 54c and the inner second section 56c. The inner enlarged portion 71c extends to the downstream end 71b.

The outer enlarged portion 71d is positioned outward of the outer second section 56d. The outer enlarged portion 71d is positioned outward of the outer second section 56d with the central axis 53 as a reference. The outer enlarged portion 71d is not positioned outward of the inner second section 56c. The outer enlarged portion 71d is not positioned outward of the inner second section 56c with the central axis 53 as a reference. The outer enlarged portion 71d has a cross sectional face in a U-shape. The outer enlarged portion 71d extends from a boundary between the outer first section 54d and the outer second section 56d. The outer enlarged portion 71d extends to the downstream end 71b. The outer enlarged portion 71d contacts the inner enlarged portion 71c.

The flow path 72 has an inner flow path 72c and an outer flow path 72d. The inner flow path 72c is substantially defined by the inner enlarged portion 71c. The outer flow path 72d is substantially defined by the outer enlarged portion 71d.

A cross sectional face of the flow path 72 includes a cross sectional face of the inner flow path 72c and a cross sectional face of the outer flow path 72d. The cross sectional face of the inner flow path 72c has substantially a semicircle shape. The cross sectional face of the outer flow path 72d has substantially a semicircle shape.

The upstream oxygen sensor 97 penetrates the inner enlarged portion 71c. The upstream oxygen sensor 97 is inserted from outside of the enlarged portion 71 into inside of the enlarged portion 71 through the inner enlarged portion 71c. The upstream oxygen sensor 97 is inserted from outside of the enlarged portion 71 into the flow path 72 through the inner enlarged portion 71c.

The upstream oxygen sensor 97 does not penetrate the outer enlarged portion 71d.

The upstream oxygen sensor 97 extends to the inner flow path 72c.

The upstream oxygen sensor 97 does not extend to the outer flow path 72d.

The upstream oxygen sensor 97 does not intersect with the central axis 53.

Fig. 10 is a view from a second direction F2. The second direction F2 is perpendicular to the central axis 53. The second direction F2 is perpendicular to a plane containing the central axis 43 of the curved portion 41, for example. The upstream oxygen sensor 97 does not overlap the straight portion 51 when seen from the second direction F2.

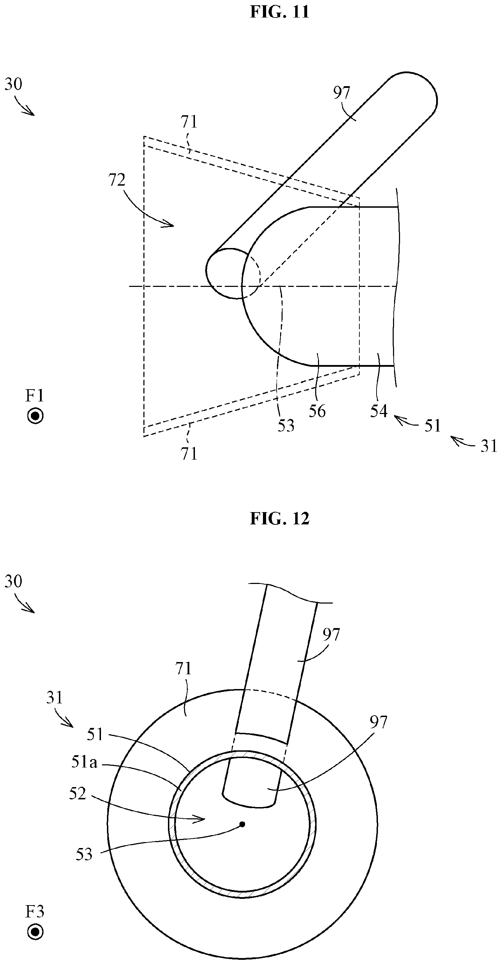

Fig. 11 illustrates the straight portion 51 and the upstream oxygen sensor 97 when seen from a first direction F1 shown in Fig. 10. Fig. 11 shows the enlarged portion 71 by dotted lines for convenience. The first direction F1 is perpendicular to the central axis 53 and is different from the second direction F2. The first direction F1 is perpendicular to the second direction F2, for example. The first direction F1 is parallel to the plane containing the central axis 43 of the curved portion 41, for example. The upstream oxygen sensor 97 overlaps the straight portion 51 when seen from the first direction F1. At least part of the upstream oxygen sensor 97 overlaps the straight portion 51 when seen from the first direction F1.

The upstream oxygen sensor 97 overlaps the second section 56 when seen from the first direction F1. At least part of the upstream oxygen sensor 97 overlaps the second section 56 when seen from the first direction F1.

Fig. 12 illustrates the straight portion 51, the enlarged portion 71, and the upstream oxygen sensor 97 when seen from the central axis 53. Specifically, Fig. 12 is a view seen from a third direction F3 shown in Fig. 10. Fig. 12 omits illustration of the curved portion 41. The upstream oxygen sensor 97 overlaps the flow path 52 when seen from the central axis 53. Part of the upstream oxygen sensor 97 overlaps the flow path 52 when seen from the central axis 53.

Fig. 12 illustrates a dimension of the flow path 52 at the upstream end 51a when seen from the central axis 53. A dimension of the flow path 52 at the downstream end 51b is substantially equal to a dimension of the flow path 52 at the upstream end 51a when seen from the central axis 53, which illustration is omitted. For example, the flow path 52 at the downstream end 51b of the straight portion 51 is not smaller than the flow path 52 at the upstream end 51a of the straight portion 51 when seen from the central axis 53.

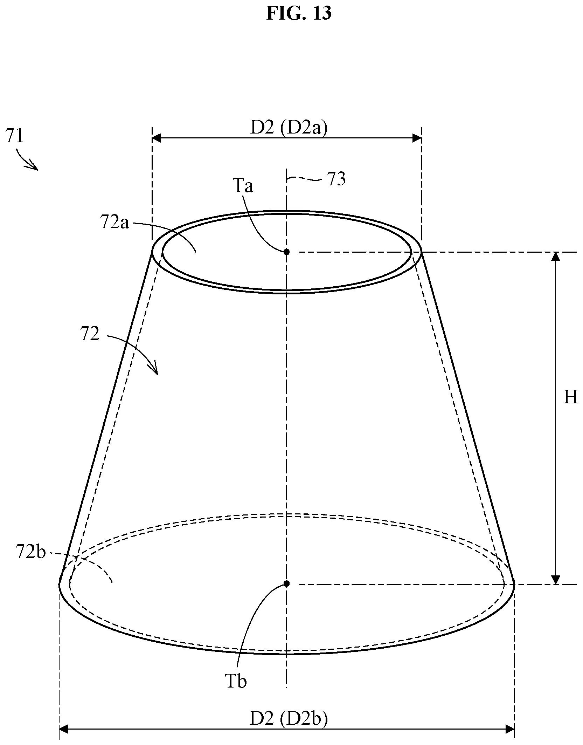

Fig. 13 is a perspective view of the enlarged portion 71. The enlarged portion 71 has a simple shape. The enlarged portion 71 has a truncated cone shape. The enlarged portion 71 has a right truncated cone shape, for example.

As described above, the flow path 72 has the cross sectional face 72a at the upstream end 71a and the cross sectional face 72b at the downstream end 71b. The cross sectional face 72a has substantially a circle shape. The cross sectional face 72b has substantially a circle shape.

The enlarged portion 71 includes a central axis 73. The central axis 73 is an imaginary straight line. The central axis 73 passes the center of the flow path 72.

Specifically, the central axis 73 passes a point Ta and a point Tb. The point Ta is a point on the cross sectional face 72a. The point Ta is positioned at the center of the cross sectional face 72a. The point Tb is a point on the cross sectional face 72b. The point Tb is positioned at the center of the cross sectional face 72b.

The central axis 73 is, for example, orthogonal to the cross sectional face 72a. The central axis 73 is, for example, orthogonal to the cross sectional face 72b.

The enlarged portion 71 extends over the central axis 73.

The enlarged portion 71 has a diameter D2. The diameter D2 enlarges from the upstream end 31a to the downstream end 31b. The diameter D2 enlarges from the upstream end 31a to the downstream end 31b at a constant rate.

The diameter D2 at the upstream end 71a is called a diameter D2a. The diameter D2 at the downstream end 71b is called a diameter D2b. The diameter D2b is larger than the diameter D2a. The diameter D2b is, for example, 1.5 times as large as the diameter D2a.

Fig. 13 shows a length H. The length H is a length of the enlarged portion 71. More specifically, the length H is a length of the enlarged portion 71 along the central axis 73. For example, the length H is larger than the diameter D2a. For example, the length H is smaller than the diameter D2b.

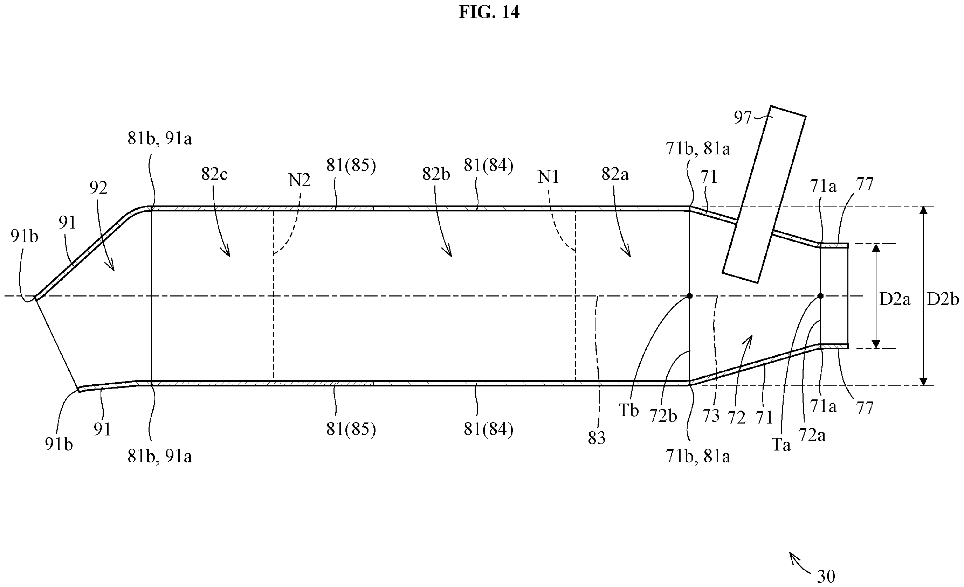

Fig. 14 is a sectional view of the enlarged portion 71, the housing portion 81, and the reduced portion 91. The cross sectional face in Fig. 14 contains the central axis 73. The enlarged portion 71 has a symmetrical shape relative to the central axis 73 in the cross sectional face containing the central axis 73.

The enlarged portion 71 is inclined relative to the central axis 73 in the cross sectional face containing the central axis 73. The enlarged portion 71 extends over a straight line connecting the upstream end 71a and the downstream end 71b in the cross sectional face containing the central axis 73. Accordingly, the flow path 72 of the enlarged portion 71 enlarges from the upstream end 71a to the downstream end 71b at a constant proportion.

The exhaust system 30 further includes an attachment ring 77. The attachment ring 77 is a member for joining the enlarged portion 71 to the straight portion 51. The attachment ring 77 is provided outside of the enlarged portion 71. The attachment ring 77 contacts the upstream end 71a of the enlarged portion 71. The attachment ring 77 extends from the upstream end 71a of the enlarged portion 71. The attachment ring 77 extends along the central axis 73. The attachment ring 77 has a tubular shape. The attachment ring 77 has a diameter substantially equal to the diameter D2a of the upstream end 71a. The diameter of the attachment ring 77 is constant along the central axis 73.

The attachment ring 77 is molded integrally with the enlarged portion 71, for example.

The housing portion 81 contacts the enlarged portion 71. The housing portion 81 contacts the downstream end 71b.

The housing portion 81 has an upstream end 81a and a downstream end 81b. The housing portion 81 extends from the upstream end 81a to the downstream end 81b. The upstream end 81a contacts the enlarged portion 71. The upstream end 81a contacts the downstream end 71b. The downstream end 81b contacts the reduced portion 91.

The housing portion 81 has a cylindrical shape with a central axis 83 as the center. The housing portion 81 has a diameter. The diameter of the housing portion 81 is substantially equal to the diameter D2b. The diameter of the housing portion 81 is substantially constant along the central axis 83.

The central axis 83 is parallel to the central axis 73, for example. The central axis 83 is coaxial to the central axis 73, for example.

The housing portion 81 forms a first space 82a, a second space 82b, and a third space 82c. The first space 82a, the second space 82b, and the third space 82c are each positioned inside of the housing portion 81. The first space 82a and the third space 82c are each a space where the catalyst 87 is not arranged. The second space 82b is a space where the catalyst 87 is arranged.

The first space 82a, the second space 82b, and the third space 82c are lined up along the central axis 83. The second space 82b is positioned downstream of the first space 82a in the direction of the exhaust gas flow. The third space 82c is positioned downstream of the second space 82b in the direction of the exhaust gas flow.

Fig. 14 illustrates boundary lines N1 and N2. The boundary line N1 forms a boundary between the first space 82a and the second space 82b. The boundary line N2 forms a boundary between the second space 82b and the third space 82c.

The first space 82a contacts the downstream end 71b. The first space 82a contacts the flow path 72. The first space 82a contacts the cross sectional face 72b.

The second space 82b contacts the first space 82a. The second space 82b further contacts the third space 82c.

The second space 82b does not contact the downstream end 71b. The second space 82b is apart from the downstream end 71b. The second space 82b does not contact the flow path 72. The second space 82b is apart from the flow path 72. The second space 82b does not contact the cross sectional face 72b. The second space 82b is apart from the cross sectional face 72b.

The housing portion 81 is composed of a first member 84 and a second member 85, for example. The first member 84 and the second member 85 are molded individually. The first member 84 is molded integrally with the enlarged portion 71, for example. The second member 85 is molded integrally with the reduced portion 91, for example. The first member 84 and the second member 85 are molded, and then the first member 84 and the second member 85 are joined each other.

The reduced portion 91 has an upstream end 91a and a downstream end 91b. The upstream end 91a is connected to the housing portion 81. The upstream end 91a is connected to the downstream end 81b. The downstream end 91b is connected to the second exhaust pipe 93.

The reduced portion 91 forms a flow path 92. The flow path 92 is a space. The flow path 92 is positioned inside of the reduced portion 91. The flow path 92 extends from the upstream end 91a to the downstream end 91b. The flow path 92 contracts from the upstream end 91a to the downstream end 91b.

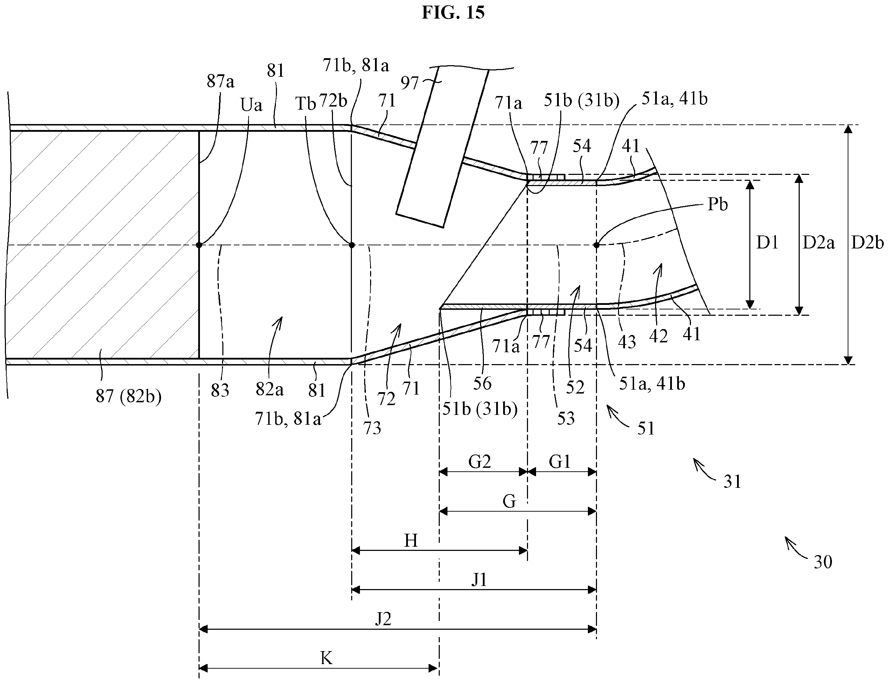

Fig. 15 is a sectional view of the straight portion 51, the enlarged portion 71, the housing portion 81, and the catalyst 87. Across sectional face in Fig. 15 contains the central axis 53.

The central axis 73 is parallel to the central axis 53, for example. The central axis 73 is coaxial to the central axis 53, for example.

The diameter D2a is substantially equal to the diameter D1. For example, the diameter D2a is slightly larger than the diameter D1.

The diameter D2b is larger than the diameter D1. The diameter D2b is, for example, 1.5 times as large as the diameter D1.

The upstream end 71a is positioned outward of the straight portion 51. The upstream end 71a is positioned outward of the boundary between the first section 54 and the second section 56.

The attachment ring 77 is positioned outward of the straight portion 51. The attachment ring 77 is positioned outward of the first section 54. The attachment ring 77 contacts the first section 54. The attachment ring 77 is joined to the first section 54. For example, the attachment ring 77 is welded on the first section 54. Accordingly, the attachment ring 77 is fixed to the first section 54. The enlarged portion 71 is connected to the straight portion 51 via the attachment ring 77.

The central axis 83 of the housing portion 81 is parallel to the central axis 53, for example. The central axis 83 is coaxial to the central axis 53, for example.

A diameter of the housing portion 81 is larger than the diameter D 1.

The catalyst 87 is arranged in the second space 82b. The catalyst 87 is not arranged in the first space 82a. The catalyst 87 does not contact the downstream end 71b. The catalyst 87 is apart from the downstream end 71b. The catalyst 87 does not contact the flow path 72. The catalyst 87 is apart from the flow path 72. The catalyst 87 does not contact the cross sectional face 72b. The catalyst 87 is apart from the cross sectional face 72b.

The catalyst 87 is not arranged in the third space 82c, which illustration is omitted. The catalyst 87 does not contact the upstream end 91a of the reduced portion 91. The catalyst 87 is apart from the upstream end 91a. The catalyst 87 does not contact the flow path 92 of the reduced portion 91. The catalyst 87 is apart from the flow path 92.

The catalyst 87 intersects with the central axis 53. Specifically, the catalyst 87 intersects with an extension line of the central axis 53.

The catalyst 87 intersects with the central axis 73. Specifically, the catalyst 87 intersects with an extension line of the central axis 73.

The catalyst 87 has a cylindrical shape extending over the central axis 83. The catalyst 87 has a diameter. The diameter of the catalyst 87 is substantially constant along the central axis 83.

The diameter of the catalyst 87 is substantially equal to the diameter of the housing portion 81. For example, the diameter of the catalyst 87 is slightly smaller than the diameter of the housing portion 81.

The diameter of the catalyst 87 is larger than the diameter D1. The diameter of the catalyst 87 is, for example, 1.5 times as large as the diameter D1.

The diameter of the catalyst 87 is larger than the diameter D2a. The diameter of the catalyst 87 is, for example, 1.5 times as large as the diameter D2a.

The diameter of the catalyst 87 is substantially equal to the diameter D2b. For example, the diameter of the catalyst 87 is slightly smaller than the diameter D2b.

The inlet face 87a has substantially a circle shape.

The inlet face 87a is larger than the cross sectional face of the flow path 52.

The inlet face 87a is substantially as large as the cross sectional face 72b.

The inlet face 87a intersects with the central axis 53. The inlet face 87a is perpendicular to the central axis 53, for example.

The inlet face 87a intersects with the central axis 73. The inlet face 87a is perpendicular to the central axis 73, for example.

The inlet face 87a includes a point Ua. The point Ua is positioned at the center of the inlet face 87a. The central axis 83 passes the point Ua, for example.

The central axis 53 passes the point Ua, for example.

The central axis 73 passes the point Ua, for example.

The length G of the straight portion 51 is smaller than the diameter D2b.

The length G1 of the first section 54 is smaller than the diameter D2b.

The length G2 of the second section 56 is smaller than the diameter D2b.

The length H of the enlarged portion 71 is larger than the length G.

The length H is larger than the length G1. The length H is larger than the length G2. The length H is, for example, more than twice as large as the length G2. The length H is larger than the diameter D1.

Fig. 15 illustrates a first distance J1. The first distance J1 is a distance between the upstream end 51a of the straight portion 51 and the downstream end 71b of the enlarged portion 71. More specifically, the first distance J1 is a distance between the upstream end 51a and the downstream end 71b along the central axis 53. The first distance J1 is less than twice as large as the diameter D2b.

Here, the first distance J1 corresponds to an entire length of the straight portion 51 and the enlarged portion 71 along the central axis 53. The first distance J1 corresponds to a length of the flow path between the downstream end 41b of the curved portion 41 and the upstream end 81a of the housing portion 81.

Fig. 15 illustrates a second distance J2. The second distance J2 is a distance between the upstream end 51a of the straight portion 51 and the inlet face 87a. More specifically, the second distance J2 is a distance between the upstream end 51a and the inlet face 87a along the central axis 53. The second distance J2 is less than three times as large as the diameter D2b.

The second distance J2 is less than twice as large as the diameter D2b in the present embodiment.

The second distance J2 is larger than the first distance J1.

Here, the second distance J2 corresponds to a length of a flow path of the exhaust gases between the downstream end 41b of the curved portion 41 and the inlet face 87a.

Fig. 15 illustrates a separation distance K. The separation distance K is a separation distance between the straight portion 51 and the catalyst 87. More specifically, the separation distance K is a separation distance between the straight portion 51 and the catalyst 87 along the central axis 53. The separation distance K is larger than the diameter D2b.

Here, the separation distance K corresponds to a length of a flow path of the exhaust gases between the downstream end 51b of the straight portion 51 and the inlet face 87a.

The following describes an exhaust gas flow. Exhaust gases flow from the engine 14 into the first exhaust pipe 31 through the upstream end 31a. The exhaust gases flow through the first exhaust pipe 31. In the first exhaust pipe 31, the exhaust gases flow in the upstream portion 61, the curved portion 41, and the straight portion 51 in this order. When the exhaust gases flow through the curved portion 41, the exhaust gases are subjected to a centrifugal force. The centrifugal force has a direction from the inner curved portion 41c to the outer curved portion 41d. The direction of the centrifugal force is, for example, a direction away from the curvature center Oc. Then, the exhaust gases exit the first exhaust pipe 31 and enter the enlarged portion 71. Moreover, the exhaust gases exit the enlarged portion 71 and enter the housing portion 81. In the housing portion 81, the exhaust gases flow in the first space 82a, the catalyst 87, and the third space 82c in this order. Then, the exhaust gases exit the housing portion 81 and enter the reduced portion 91.

### <4. Analysis of exhaust gas flow in catalyst 87>

The Inventor analyzed an exhaust gas flow in the catalyst 87. Specifically, the Inventor calculated a distribution of flow velocities of exhaust gases at the inlet face 87a of the catalyst 87 when the exhaust system 30 of the present embodiment guides the exhaust gases.

Moreover, the Inventor calculated a distribution of flow velocities of exhaust gases at an inlet face 87a of a catalyst 87 when an exhaust system of a comparative example guides the exhaust gases. The comparative example differs from the embodiment only in a straight portion 51. Specifically, the straight portion 51 in the comparative example is not inserted into inside of an enlarged portion 71. The straight portion 51 in the comparative example does not include a second section 56. The straight portion 51 in the comparative example is composed of only a first section 54. The entire of the straight portion 51 in the comparative example corresponds to the first section 54. The exhaust system of the comparative example corresponds to a system that is obtained by omitting the second section 56 from the exhaust system 30 of the embodiment. The configuration of the exhaust system of the comparative example is same as that of the exhaust system 30 of the embodiment except for the difference in straight portion 51. In analysis, a condition of the exhaust gases that the exhaust system of the comparative example guides is same as a condition of the exhaust gases that the exhaust system 30 of the embodiment guides.

The following indicates an analysis result about the exhaust system 30 of the embodiment:
maximum value V1a = 27.3 m/s
minimum value V1b = 22.0 m/s
difference V1d = 5.3 m/s

The following indicates an analysis result about the exhaust system of the comparative example:
maximum value V2a = 30.3 m/s
minimum value V2b = 20.8 m/s
difference V2d = 9.5 m/s

Here, the maximum values V1a and V2a are each the maximum value of the flow velocities of the exhaust gases at the inlet face 87a. The minimum values V1b and V2b are each the minimum value of the flow velocities of the exhaust gases at the inlet face 87a. The difference V1d is a difference between the maximum value V1a and the minimum value V1b. The difference V2d is a difference between the maximum value V2a and the minimum value V2b.

The followings are to be found from the above analyses. The feature that "the straight portion 51 is inserted from outside of the enlarged portion 71 into inside of the enlarged portion 71 through the upstream end 71a of the enlarged portion 71" is called a first configuration for convenience. The exhaust system 30 according to the present embodiment adopts the first configuration. The exhaust system according to the comparative example does not adopt the first configuration.

Firstly, the maximum value V1a of the embodiment is smaller than the maximum value V2a of the comparative example. Accordingly, the first configuration contributes to reduction in the maximum value of the flow velocity of the exhaust gases at the inlet face 87a of the catalyst 87.

Secondly, the minimum value V1b of the embodiment is larger than the minimum value V2b of the comparative example. Accordingly, the first configuration contributes to an increase in minimum value of the flow velocity of the exhaust gases at the inlet face 87a of the catalyst 87.

Thirdly, the difference V1d of the embodiment is smaller than the difference V2d of the comparative example. Accordingly, the first configuration contributes to reduction in deviation of the flow velocity of the exhaust gases at the inlet face 87a of the catalyst 87.

### <5. Effect of the embodiment>

The exhaust system 30 guides exhaust gases of the engine 14. The exhaust system 30 includes the first exhaust pipe 31, the enlarged portion 71, the housing portion 81, the catalyst 87, the second exhaust pipe 93, and the muffler 95. The first exhaust pipe 31 is connected to the engine 14. The enlarged portion 71 is connected to the first exhaust pipe 31. The housing portion 81 is connected to the enlarged portion 71. The catalyst 87 is arranged inside of the housing portion 81. The second exhaust pipe 93 is connected to the housing portion 81. The muffler 95 is connected to the second exhaust pipe 93. Accordingly, the catalyst 87 is arranged outside of the muffler 95. Hereunder, the arrangement of the catalyst 87 outside of the muffler 95 is referred to as a second layout for convenience. The exhaust system 30 adopts the second layout.

The exhaust gases flow from the engine 14 to the first exhaust pipe 31. The exhaust gases flow from the first exhaust pipe 31 to the enlarged portion 71. The exhaust gases flow from the enlarged portion 71 to the housing portion 81. The exhaust gases pass through the catalyst 87 arranged inside of the housing portion 81. The exhaust gases flow from the housing portion 81 to the second exhaust pipe 93. The exhaust gases flow from the second exhaust pipe 93 to the muffler 95. Accordingly, the catalyst 87 is located downstream of the engine 14 in the direction of the exhaust gas flow. The catalyst 87 is located upstream of the muffler 95 in the direction of the exhaust gas flow. A flow path of the exhaust gases between the engine 14 and the catalyst 87 is shorter than a flow path of the exhaust gases between the engine 14 and the muffler 95. That is, the catalyst 87 is positioned relatively near the engine 14. In short, in the second layout, the flow path of the exhaust gases between the engine 14 and the catalyst 87 is short. In the second layout, the catalyst 87 is positioned near the engine 14. Consequently, time for activating the catalyst 87 is suitably short.

The first exhaust pipe 31 is located downstream of the engine 14 in the direction of the exhaust gas flow. The first exhaust pipe 31 is located upstream of the catalyst 87 in the direction of the exhaust gas flow. The first exhaust pipe 31 includes the curved portion 41. Accordingly, the catalyst 87 is located downstream of the curved portion 41 in the direction of the exhaust gas flow. Moreover, a flow path of the exhaust gases between the curved portion 41 and the catalyst 87 is shorter than a flow path of the exhaust gases between the curved portion 41 and the muffler 95. That is, the catalyst 87 is positioned relatively near the curved portion 41. In short, in the second layout, the flow path of the exhaust gases between the curved portion 41 and the catalyst 87 is short. In the second layout, the catalyst 87 is positioned near the curved portion 41.

The first exhaust pipe 31 includes the straight portion 51. The straight portion 51 extends linearly from the curved portion 41. The straight portion 51 is connected to the enlarged portion 71. The straight portion 51 is located downstream of the curved portion 41 in the direction of the exhaust gas flow. The straight portion 51 is located upstream of the catalyst 87 in the direction of the exhaust gas flow. The flow path 52 of the straight portion 51 is part of the flow path of the exhaust gases between the curved portion 41 and the catalyst 87. As described above, in the second layout, the flow path of the exhaust gases between the curved portion 41 and the catalyst 87 is short. In the second layout, the catalyst 87 is positioned near the curved portion 41. Accordingly, in the second layout, the flow path 52 of the straight portion 51 is short.

The enlarged portion 71 has the upstream end 71a and the downstream end 71b. The upstream end 71a is connected to the straight portion 51. The downstream end 71b is connected to the housing portion 81. The enlarged portion 71 forms the flow path 72. The flow path 72 enlarges from the upstream end 71a to the downstream end 71b. The straight portion 51 is inserted from outside of the enlarged portion 71 into inside of the enlarged portion 71 through the upstream end 71a. That is, the exhaust system 30 adopts the first configuration. Then, the straight portion 51 extends toward the catalyst 87.

At first glance, it is assumed that the first configuration causes increase of a deviation of the exhaust gas flow in the catalyst 87.

However, the Inventor has found the following about the first configuration. That is, when the catalyst 87 is positioned near the curved portion 41, the first configuration does not increase the deviation of the exhaust gas flow in the catalyst 87, but rather decreases the deviation of the exhaust gas flow in the catalyst 87. Specifically, the first configuration with the second layout reduces the deviation of the flow velocities of the exhaust gases at the inlet face 87a of the catalyst 87.

A causal relationship between the first configuration and the effect of the first configuration is presumed as under. The causal relationship between the first configuration and the effect of the first configuration corresponds to a reason why the first configuration reduces the deviation of the exhaust gas flow in the catalyst 87 when the catalyst 87 is positioned near the curved portion 41. When the exhaust gases flow in the curved portion 41, the exhaust gas flow is deviated at a cross sectional face of the flow path 42 of the curved portion 41. Exhaust gases flow from the curved portion 41 to the straight portion 51. As described above, in the second layout, the flow path 52 of the straight portion 51 is short. When the catalyst 87 is positioned near the curved portion 41, the flow path 52 of the straight portion 51 is short. Accordingly, the exhaust gas flow is still deviated also at the downstream end 51b of the straight portion 51. The exhaust gases are discharged from the straight portion 51 through the downstream end 51b. When the exhaust gases are discharged from the straight portion 51, the exhaust gas flow is deviated. Thereafter, the exhaust gases reach the catalyst 87 through the enlarged portion 71. In the first configuration, at least part of the downstream end 51b is apart from the enlarged portion 71. In other words, in the first configuration, at least part of the downstream end 51b does not contact the enlarged portion 71. In the first configuration, at least part of the downstream end 51b does not continue to the enlarged portion 71. Accordingly, after the exhaust gases are discharged from the straight portion 51, the exhaust gases do not flow smoothly along the enlarged portion 71. After the exhaust gases are discharged from the straight portion 51, the exhaust gases are not guided sufficiently by the enlarged portion 71. Accordingly, after the exhaust gases are discharged from the straight portion 51, the exhaust gas flow is disturbed within the enlarged portion 71. The exhaust gas flow is disturbed within the enlarged portion 71 before the exhaust gases enter the catalyst 87. As described above, when the exhaust gases are discharged from the straight portion 51, the exhaust gas flow is deviated. When the deviated exhaust gas flow is disturbed, the deviation of the exhaust gas flow is reduced. Accordingly, the deviation of the exhaust gas flow is reduced within the enlarged portion 71. More specifically, the deviation of the exhaust gas flow is reduced after the exhaust gases are discharged from the straight portion 51 and before the exhaust gases reach the catalyst 87. The deviation of the exhaust gas flow is reduced after the exhaust gases flow out of the curved portion 41 and before the exhaust gases enter the catalyst 87. In such a manner as above, the first configuration with the second layout contributes to reduction in deviation of the exhaust gas flow in the catalyst 87. When the catalyst 87 is positioned near the curved portion 41, the first configuration contributes to reduction in deviation of the exhaust gas flow in the catalyst 87. That is, the first configuration with the second layout is useful for reducing the deviation of the exhaust gas flow in the catalyst 87.

As described above, the deviation of the exhaust gas flow in the catalyst 87 is reduced even when the flow path of the exhaust gases between the engine 14 and the catalyst 87 is short. Accordingly, part of the catalyst 87 demonstrating a purification performance is effectively increased. In other words, use efficiency of the catalyst 87 is suitably improved. This suitably improves the purification performance of the catalyst 87 even when the flow path of the exhaust gases between the engine 14 and the catalyst 87 is short.

As described above, the exhaust system 30 according to the present embodiment is capable of shortening time for activating the catalyst 87 and reducing the deviation of the exhaust gas flow in the catalyst 87. This suitably improves purification performance of the catalyst 87.

The first configuration is simple. For example, in the first configuration, the straight portion 51 is not necessarily molded in a complex shape. In the first configuration, the enlarged portion 71 is not necessarily molded in a complex shape. In the first configuration, a member for diffusing the exhaust gas flow is not necessarily added, for example. In the first configuration, a member for regulating the exhaust gas flow is not necessarily added, for example. This results in suitable reduction in deviation of the exhaust gas flow in the catalyst 87 with a simple configuration.

The first configuration with the second layout further decreases the maximum value of the flow velocities of the exhaust gases at the inlet face 87a of the catalyst 87. Accordingly, the catalyst 87 can be protected suitably from pressure of the exhaust gases. The inlet face 87a can be protected suitably from pressure of the exhaust gases. Thus, a life of the catalyst 87 can be elongated suitably.

The first configuration with the second layout further increases the minimum value of the flow velocities of the exhaust gases at the inlet face 87a of the catalyst 87. Accordingly, part of the catalyst not demonstrating a purification performance is effectively decreased. Accordingly, it is much easier to use the entire of the catalyst for purification of exhaust gases. Consequently, the purification performance of the catalyst 87 is improved more suitably.

The curved portion 41 is curved at the angle θ2 of 45 degrees or more. The angle θ2 is relatively large. Accordingly, the deviation of the exhaust gas flow in the curved portion 41 is relatively large. Even when the angle θ2 is large, however, the first configuration with the second layout is useful for reducing the deviation of the exhaust gas flow in the catalyst 87.

Rather, the larger the angle θ2 is, the higher utility of the first configuration becomes. For example, the deviation of the exhaust gas flow in the curved portion 41 increases as the angle θ2 becomes large. The first configuration decreases the deviation of the exhaust gas flow more effectively as the deviation of the exhaust gas flow in the curved portion 41 increases.

The curved portion 41 is curved at the central angle θ3 of 45 degrees or more. The central angle θ3 is relatively large. Accordingly, the deviation of the exhaust gas flow in the curved portion 41 is relatively large. Even when the central angle θ3 is large, however, the first configuration with the second layout is useful for reducing the deviation of the exhaust gas flow in the catalyst 87. Rather, the larger the central angle θ3 is, the higher utility of the first configuration becomes.

The straight portion 51 includes the upstream end 51a. The upstream end 51a contacts the curved portion 41. The first distance J1 corresponds to a distance between the upstream end 51a of the straight portion 51 and the downstream end 71b of the enlarged portion 71. The first distance J1 corresponds to a length of the flow path between the downstream end 41b of the curved portion 41 and the upstream end 81a of the housing portion 81. The diameter D2b is a diameter of the downstream end 71b of the enlarged portion 71. The first distance J1 is smaller than twice as large as the diameter D2b. Accordingly, the first distance J1 is relatively small. Even when the first distance J1 is small, however, the first configuration with the second layout is useful for reducing the deviation of the exhaust gas flow in the catalyst 87. Rather, the shorter the first distance J1 is, the higher utility of the first configuration becomes.

The second distance J2 is a distance between the upstream end 51a of the straight portion 51 and the inlet face 87a of the catalyst 87. The second distance J2 corresponds to a length of a flow path of the exhaust gases between the downstream end 41b of the curved portion 41 and the inlet face 87a of the catalyst 87. The second distance J2 is smaller than three times as large as the diameter D2b. Accordingly, the second distance J2 is relatively small. Even when the second distance J2 is small, however, the first configuration with the second layout is useful for reducing the deviation of the exhaust gas flow in the catalyst 87. Rather, the shorter the second distance J2 is, the higher utility of the first configuration becomes.

The second distance J2 is smaller than twice as large as the diameter D2b in the present embodiment. The second distance J2 is much smaller. Even when the second distance J2 is much smaller, however, the first configuration with the second layout is useful for reducing the deviation of the exhaust gas flow in the catalyst 87.

The straight portion 51 includes the first section 54. The first section 54 is positioned outside of the enlarged portion 71. The length G1 of the first section 54 corresponds to a length of the flow path of the exhaust gases between the downstream end 41b of the curved portion 41 and the upstream end 71a of the enlarged portion 71. The length G1 is smaller than the diameter D2b. Accordingly, the length G1 is relatively small. Even when the length G1 is small, however, the first configuration with the second layout is useful for reducing the deviation of the exhaust gas flow in the catalyst 87. Rather, the shorter the length G1 is, the higher utility of the first configuration becomes.

The straight portion 51 includes the second section 56. The second section 56 is positioned inside of the enlarged portion 71. The second section 56 has the outer surface 57. The enlarged portion 71 includes an inner surface 74. At least part of the outer surface 57 is apart from the inner surface 74. At least part of the outer surface 57 does not contact the inner surface 74. At least part of the outer surface 57 does not continue to the inner surface 74. Accordingly, after the exhaust gases are discharged from the second section 56, the exhaust gases do not flow smoothly along the enlarged portion 71. Consequently, after the exhaust gases are discharged from the second section 56, the exhaust gas flow is suitably disturbed within the enlarged portion 71. Therefore, the deviation of the exhaust gas flow is suitably reduced within the enlarged portion 71. This results in suitable reduction in deviation of the exhaust gas flow in the catalyst 87.

The separation distance K is a separation distance between the straight portion 51 and the catalyst 87. The separation distance K corresponds to a length of the flow path of the exhaust gases between the downstream end 51b of the straight portion 51 and the inlet face 87a of the catalyst 87. The separation distance K is larger than the diameter D2b. Accordingly, the separation distance K is not excessively small. Accordingly, the deviation of the exhaust gas flow is suitably reduced after the exhaust gases are discharged from the straight portion 51 and before the exhaust gases reach the catalyst 87. This results in suitable reduction in deviation of the exhaust gas flow in the catalyst 87.

The separation distance K is smaller than twice as large as the diameter D2b. Accordingly, the separation distance K is relatively small. Even when the separation distance K is small, however, the first configuration with the second layout is useful for reducing the deviation of the exhaust gas flow in the catalyst 87.

The straight portion 51 is entirely positioned upstream of the downstream end 71b of the enlarged portion 71. The straight portion 51 is entirely positioned upstream of the entire of the downstream end 71b. The entire of the straight portion 51 is positioned upstream of the entire of the downstream end 71b in the direction of the exhaust gas flow. Accordingly, all the exhaust gases discharged from the straight portion 51 enter the enlarged portion 71. Consequently, the deviation of the exhaust gas flow is suitably reduced within the enlarged portion 71.

The entire of the catalyst 87 is positioned downstream of the downstream end 71b. The entire of the catalyst 87 is positioned downstream of the entire of the downstream end 71b. The entire of the catalyst 87 is positioned downstream of the entire of the downstream end 71b in the direction of the exhaust gas flow. Accordingly, the exhaust gases enter the catalyst 87 after the exhaust gases flow out of the enlarged portion 71. The exhaust gases do not enter the catalyst 87 before the exhaust gases flow out of the enlarged portion 71. Consequently, the exhaust gases enter the catalyst 87 after the deviation of the exhaust gas flow is reduced within the enlarged portion 71. This results in suitable reduction in deviation of the exhaust gas flow in the catalyst 87.

The downstream end 51b of the straight portion 51 is located inside of the enlarged portion 71. The downstream end 51b is open to the inside of the enlarged portion 71. The exhaust gases are discharged from the straight portion 51 through the downstream end 51b. Accordingly, the exhaust gases enter the enlarged portion 71 immediately after the exhaust gases are discharged from the straight portion 51. Consequently, the deviation of the exhaust gas flow is reduced immediately after the exhaust gases are discharged from the straight portion 51. This results in suitable reduction in deviation of the exhaust gas flow in the catalyst 87.

The upstream end 51a of the straight portion 51 contacts the curved portion 41. The downstream end 51b of the straight portion 51 is opened in the enlarged portion 71. The diameter D1 of the straight portion 51 is substantially constant from the upstream end 51a of the straight portion 51 to the downstream end 51b of the straight portion 51. Accordingly, the diameter D1 at the downstream end 51b is not smaller than the diameter D1 at the upstream end 51a. Thus, the flow velocity of the exhaust gases at the downstream end 51b does not increase from the flow velocity of the exhaust gases at the upstream end 51a. Consequently, the flow path 52 of the straight portion 51 does not contribute to an increase in deviation of the exhaust gas flow in the catalyst 87. The flow path 52 does not prevent reduction in deviation of the exhaust gas flow in the catalyst 87. Therefore, the first configuration with the second layout reduces the deviation of the exhaust gas flow in the catalyst 87 more easily. When the diameter D1 is substantially constant from the upstream end 51a to the downstream end 51b, the first configuration with the second layout reduces the deviation of the exhaust gas flow in the catalyst 87 more easily.

The straight portion 51 has the central axis 53. The central axis 53 passes the center of the flow path 52 in the straight portion 51. The flow path 52 at the downstream end 51b of the straight portion 51 is substantially as large as the flow path 52 at the upstream end 51a of the straight portion 51 when seen from the central axis 53. Accordingly, the flow path 52 at the downstream end 51b is not smaller than the flow path 52 at the upstream end 51a. Thus, the flow velocity of the exhaust gases at the downstream end 51b does not increase from the flow velocity of the exhaust gases at the upstream end 51a. Consequently, the flow path 52 of the straight portion 51 does not contribute to an increase in deviation of the exhaust gas flow in the catalyst 87. The flow path 52 does not prevent reduction in deviation of the exhaust gas flow in the catalyst 87. Therefore, the first configuration with the second layout reduces the deviation of the exhaust gas flow in the catalyst 87 more easily. When the flow path 52 at the downstream end 51b is substantially as large as the flow path 52 at the upstream end 51a when seen from the central axis 53, the first configuration with the second layout reduces the deviation of the exhaust gas flow in the catalyst 87 more easily.

The downstream end 51b of the straight portion 51 is inclined relative to the central axis 53 of the straight portion 51. Accordingly, the deviation of the exhaust gas flow is suitably reduced within the enlarged portion 71 after the exhaust gases are discharged from the straight portion 51. This results in suitable reduction in deviation of the exhaust gas flow in the catalyst 87.

The exhaust system 30 includes the upstream oxygen sensor 97. The upstream oxygen sensor 97 is attached to the enlarged portion 71. Accordingly, the upstream oxygen sensor 97 is located near the catalyst 87. Consequently, the upstream oxygen sensor 97 detects an oxygen concentration of the exhaust gases at an appropriate position. The upstream oxygen sensor 97 appropriately detects the oxygen concentration of exhaust gases upstream of the catalyst 87.

The curved portion 41 has the central axis 43. The central axis 43 passes the center of the flow path 42 in the curved portion 41. The curved portion 41 has the inner curved portion 41c. The inner curved portion 41c is positioned more inward than the central axis 43. The inner curved portion 41c has a U-shaped cross sectional face. The inner curved portion 41c extends along the central axis 43. The curved portion 41 has the outer curved portion 41d. The outer curved portion 41d is positioned more outward than the central axis 43. The outer curved portion 41d has a U-shaped cross sectional face. The outer curved portion 41d extends along the central axis 43. When the exhaust gases flow through the curved portion 41, a centrifugal force acts on the exhaust gases. The centrifugal force has a direction from the inner curved portion 41c to the outer curved portion 41d. Accordingly, the exhaust gas flow in the curved portion 41 is deviated to the outer curved portion 41d. For example, the exhaust gases in the outer curved portion 41d flow more rapidly than the exhaust gases in the inner curved portion 41c. Exhaust gases flow from the curved portion 41 to the straight portion 51. The straight portion 51 has an inner straight portion 51c and an outer straight portion 51d. The inner straight portion 51c continues to the inner curved portion 41c. Accordingly, the exhaust gases flow from the inner curved portion 41c to the inner straight portion 51c. The outer straight portion 51d continues to the outer curved portion 41d. Consequently, the exhaust gases flow from the outer curved portion 41d to the outer straight portion 51d. As described above, the exhaust gas flow in the curved portion 41 is deviated to the outer curved portion 41d. Accordingly, the exhaust gas flow in the straight portion 51 is deviated to the outer straight portion 51d. For example, the exhaust gases in the outer straight portion 51d flow more rapidly than the exhaust gases in the inner straight portion 51c. The exhaust gases are discharged from the inner straight portion 51c to the enlarged portion 71. The exhaust gases are discharged from the outer straight portion 51d to the enlarged portion 71. Thereafter, the exhaust gases flow from the enlarged portion 71 to the catalyst 87. As described above, the exhaust gas flow in the straight portion 51 is deviated to the outer straight portion 51d. Here, the length of the outer straight portion 51d is larger than the length Gc of the inner straight portion 51c. The length of the outer straight portion 51d is equal to the length G of the straight portion 51. Accordingly, the outer straight portion 51d is further apart from the enlarged portion 71. The outer straight portion 51d is further separated from the enlarged portion 71. Consequently, the deviation of the exhaust gas flow is effectively reduced after the exhaust gases flow out of the curved portion 41 and before the exhaust gases enter the catalyst 87. This results in effective reduction in deviation of the exhaust gas flow in the catalyst 87.

The inner straight portion 51c has the inner second section 56c. The outer straight portion 51d has the outer second section 56d. The inner second section 56c and the outer second section 56d are each positioned inside of the enlarged portion 71. The exhaust gases are discharged from the inner straight portion 51c to the enlarged portion 71 through the inner second section 56c. The exhaust gases are discharged from the outer straight portion 51d to the enlarged portion 71 through the outer second section 56d. As described above, the exhaust gas flow in the straight portion 51 is deviated to the outer straight portion 51d. Here, the length of the outer second section 56d is larger than the length G2c of the inner second section 56c. The length of the outer second section 56d is equal to the length G2 of the second section 56. Accordingly, the outer second section 56d is inserted into inside of the enlarged portion 71 more deeply than the inner second section 56c. Consequently, the outer second section 56d is further apart from the enlarged portion 71. The outer second section 56d is further separated from the enlarged portion 71. Consequently, the deviation of the exhaust gas flow is effectively reduced after the exhaust gases flow out of the curved portion 41 and before the exhaust gases enter the catalyst 87. This results in effective reduction in deviation of the exhaust gas flow in the catalyst 87.

The enlarged portion 71 has the inner enlarged portion 71c and the outer enlarged portion 71d. The inner enlarged portion 71c is positioned outward of the inner second section 56c. The outer enlarged portion 71d is positioned outward of the outer second section 56d. The upstream oxygen sensor 97 is inserted from outside of the enlarged portion 71 into inside of the enlarged portion 71 through the inner enlarged portion 71c. Accordingly, the upstream oxygen sensor 97 is positioned near the inner second section 56c. Here, the length Gc2 of the inner second section 56c is smaller than the length of the outer second section 56d. This easily prevents interference between the upstream oxygen sensor 97 and the inner second section 56c. In addition, the upstream oxygen sensor 97 is positioned far from the outer second section 56d. This also easily prevents interference between the upstream oxygen sensor 97 and the outer second section 56d. In summary, since the upstream oxygen sensor 97 is attached to the inner enlarged portion 71c, the interference between the upstream oxygen sensor 97 and the straight portion 51 is suitably avoidable.

The upstream oxygen sensor 97 overlaps the flow path 52 of the straight portion 51 when seen from the central axis 53 of the straight portion 51. Moreover, the upstream oxygen sensor 97 overlaps the straight portion 51 when seen from the first direction F1. Here, the first direction F1 is perpendicular to the central axis 53 of the straight portion 51. Accordingly, at least part of the upstream oxygen sensor 97 is arranged adjacent to the downstream end 51b of the straight portion 51. Consequently, the upstream oxygen sensor 97 detects an oxygen concentration of the exhaust gases at an appropriate position. The upstream oxygen sensor 97 appropriately detects the oxygen concentration of exhaust gases upstream of the catalyst 87. On the other hand, the upstream oxygen sensor 97 does not overlap the straight portion 51 when seen from the second direction F2. Here, the second direction F2 is perpendicular to the central axis 53 of the straight portion 51 and is different from the first direction F1. As a result, interference between the upstream oxygen sensor 97 and the straight portion 51 is suitably avoidable.

The enlarged portion 71 has a simple shape. For example, the enlarged portion 71 extends over a straight line connecting the upstream end 71a and the downstream end 71b in the cross sectional face containing the central axis 73. Consequently, it is easy to attach the upstream oxygen sensor 97 to the enlarged portion 71.

The straddled vehicle 1 includes the exhaust system 30. Accordingly, the straddled vehicle 1 is capable of shortening time for activating the catalyst 87 and reducing the deviation of the exhaust gas flow in the catalyst 87. This suitably improves purification performance of the catalyst 87.

### <6. Modifications>

This invention is not limited to the foregoing embodiment, but may be modified as follows.

(1) In the present embodiment, the downstream end 51b of the straight portion 51 is inclined relative to the central axis 53. However, the present invention is not limited to this. For example, the downstream end 51b of the straight portion 51 may be orthogonal to the central axis 53.

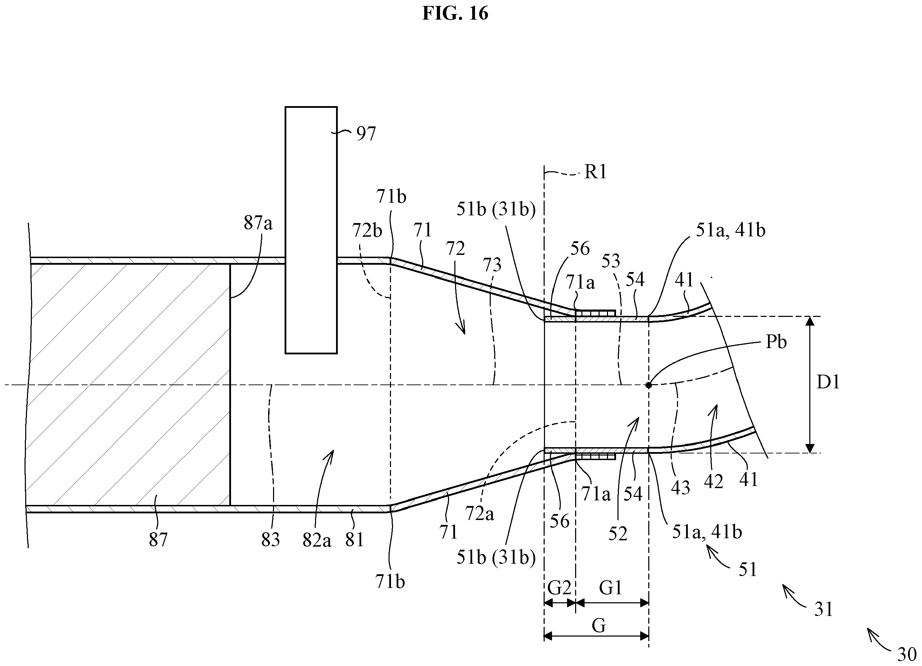

Fig. 16 is a sectional view of an exhaust system 30 according to one modification. Like numerals are used to identify like components which are the same as those in the present embodiment, and the components will not particularly be described. A vertical plane R1 is orthogonal to the central axis 53. A downstream end 51b is positioned on the vertical plane R1. The entire of the downstream end 51b is positioned on the vertical plane R1. That is, the downstream end 51b is orthogonal to the central axis 53.

According to the present modification, the deviation of the exhaust gas flow is suitably reduced within the enlarged portion 71 after the exhaust gases are discharged from the straight portion 51. This results in suitable reduction in deviation of the exhaust gas flow in the catalyst 87.

(2) In the present embodiment, the length G of the straight portion 51 is larger than the diameter D1. However, the present invention is not limited to this. As illustrated in Fig. 16, the length G may be smaller than the diameter D1.

(3) In the present embodiment, the length G2 of the second section 56 is larger than the length G1 of the first section 54. However, the present invention is not limited to this. As illustrated in Fig. 16, the length G2 may be smaller than the length G1.

(4) In the present embodiment, the length G2 is larger than half the diameter D1 of the straight portion 51. However, the present invention is not limited to this. As illustrated in Fig. 16, the length G2 may be smaller than the half the diameter D1.

(5) In the present embodiment, the entire of the downstream end 51b of the straight portion 51 is located inside of the enlarged portion 71. However, the present invention is not limited to this. For example, part of the downstream end 41b may be located inside of the enlarged portion 71. For example, the other part of the downstream end 41b may be located outside of the enlarged portion 71. For example, the other part of the downstream end 41b may be located inside of the attachment ring 77.

(6) In the present embodiment, the upstream oxygen sensor 97 is attached to the enlarged portion 71. However, the present invention is not limited to this. For example, the upstream oxygen sensor 97 may be attached to the housing portion 81. For example, the upstream oxygen sensor 97 may detect an oxygen concentration of exhaust gases in the housing portion 81.

Reference is made to Fig. 16. An upstream oxygen sensor 97 penetrates a housing portion 81. The upstream oxygen sensor 97 is inserted from outside of the housing portion 81 into inside of the housing portion 81 through the housing portion 81. The upstream oxygen sensor 97 penetrates the housing portion 81 and is inserted from outside of the housing portion 81 into a first space 82a. The upstream oxygen sensor 97 detects an oxygen concentration of exhaust gases in the first space 82a.

In the present modification, the upstream oxygen sensor 97 is located near the catalyst 87. Consequently, the upstream oxygen sensor 97 detects an oxygen concentration of the exhaust gases at an appropriate position. The upstream oxygen sensor 97 appropriately detects the oxygen concentration of exhaust gases upstream of the catalyst 87.

(7) In the present embodiment, the straddled vehicle 1 is of an under bone type. In the present embodiment, the exhaust system 30 is used for the straddled vehicle 1 of the under bone type. However, the present invention is not limited to this. For example, the straddled vehicle 1 may be changed to a vehicle other than the under bone type. For example, the exhaust system 30 may be used for a vehicle other than the under bone type. The following describes five modifications.

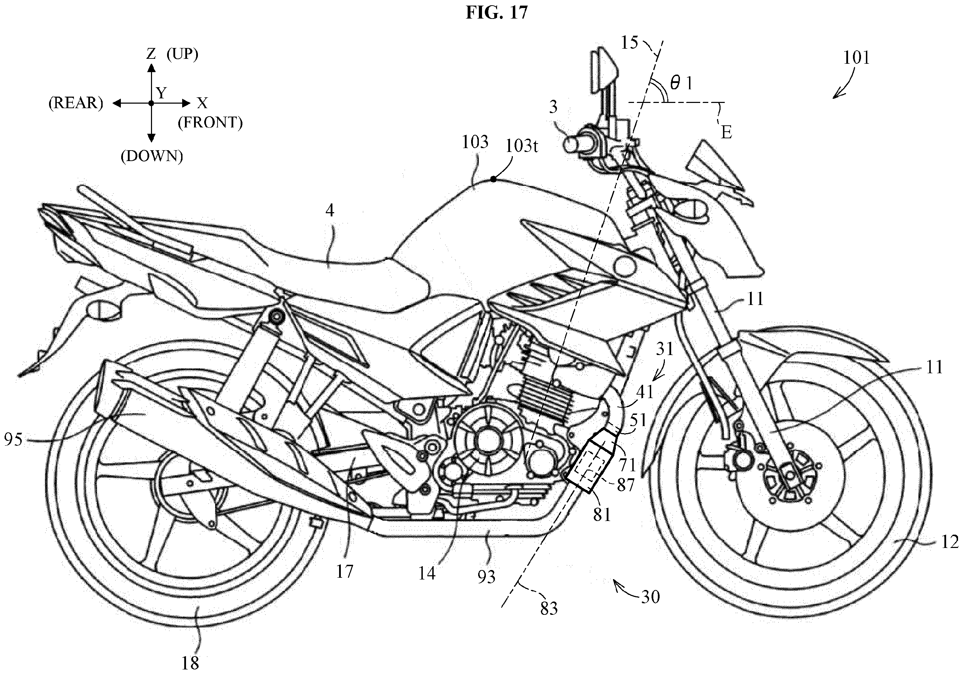

(7-1) Fig. 17 is a right side view of a straddled vehicle 101 according to another modification. Like numerals are used to identify like components which are the same as or similar to those in the present embodiment, and the components will not particularly be described. The straddled vehicle 101 is classified as a street type vehicle. The exhaust system 30 is used for the straddled vehicle 101 of a street type.

The straddled vehicle 101 does not form the recessed space 5 described in the present embodiment.

The straddled vehicle 101 has a fuel tank 103. The fuel tank 103 is positioned more rearward than the handlebar 3 and more forward than the seat 4. At least part of the fuel tank 103 is positioned more rearward than the entire of the handlebar 3 and more forward than the entire of the seat 4.

At least part of the seat 4 is located at a height position equal in level to the fuel tank 103. The fuel tank 103 includes an upper end 103t. For example, the entire of the seat 4 is located lower than the upper end 103t.

A driver sits astride the seat 4. The driver puts on a knee grip. The knee grip is a holding of part of the straddled vehicle 101 between the driver's legs. For example, the driver holds the fuel tank 103 between the legs.

A cylinder axis 15 extends in the up-down direction Z. The cylinder axis 15 is closer to the up-down direction Z than the longitudinal direction X in the side view of the vehicle. For example, the cylinder axis 15 is substantially vertical in the side view of the vehicle.

An angle θ1 is 45 degrees or larger.

A first exhaust pipe 31 extends forward from the engine 14 in the side view of the vehicle. Then, the first exhaust pipe 31 is curved and extends downward in the side view of the vehicle. An enlarged portion 71 extends downward from the first exhaust pipe 31 in the side view of the vehicle. A housing portion 81 extends downward from the enlarged portion 71 in the side view of the vehicle. A second exhaust pipe 93 extends downward from the housing portion 81 in the side view of the vehicle. Then, the second exhaust pipe 93 is curved and extends rearward in the side view of the vehicle. A muffler 95 extends rearward from the second exhaust pipe 93 in the side view of the vehicle.

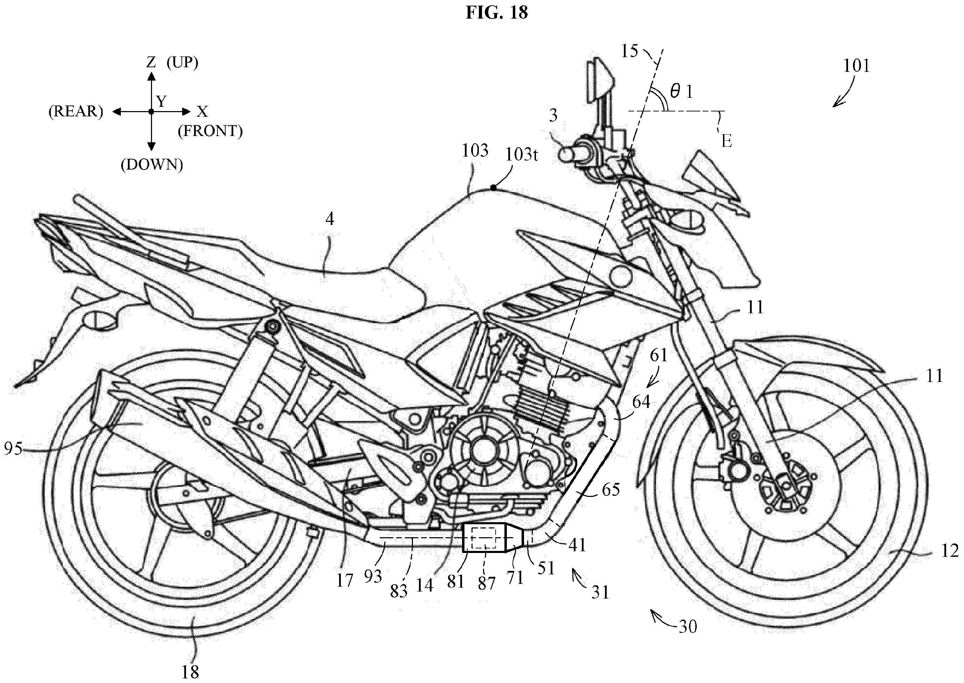

(7-2) Fig. 18 is a right side view of a straddled vehicle 101 according to another modification. Like numerals are used to identify like components which are the same as or similar to those in the present embodiment, and the components will not particularly be described. The modification illustrated in Fig. 18 differs from the modification illustrated in Fig. 17 in the exhaust system 30.

A first exhaust pipe 31 extends forward from an engine 14 in the side view of the vehicle. Then, the first exhaust pipe 31 is curved and extends downward in the side view of the vehicle. Then, the first exhaust pipe 31 is further curved and extends rearward in the side view of the vehicle. An enlarged portion 71 extends rearward from a first exhaust pipe 31 in the side view of the vehicle. A housing portion 81 extends rearward from the enlarged portion 71 in the side view of the vehicle. A second exhaust pipe 93 extends rearward from the housing portion 81 in the side view of the vehicle. A muffler 95 extends rearward from the second exhaust pipe 93 in the side view of the vehicle.

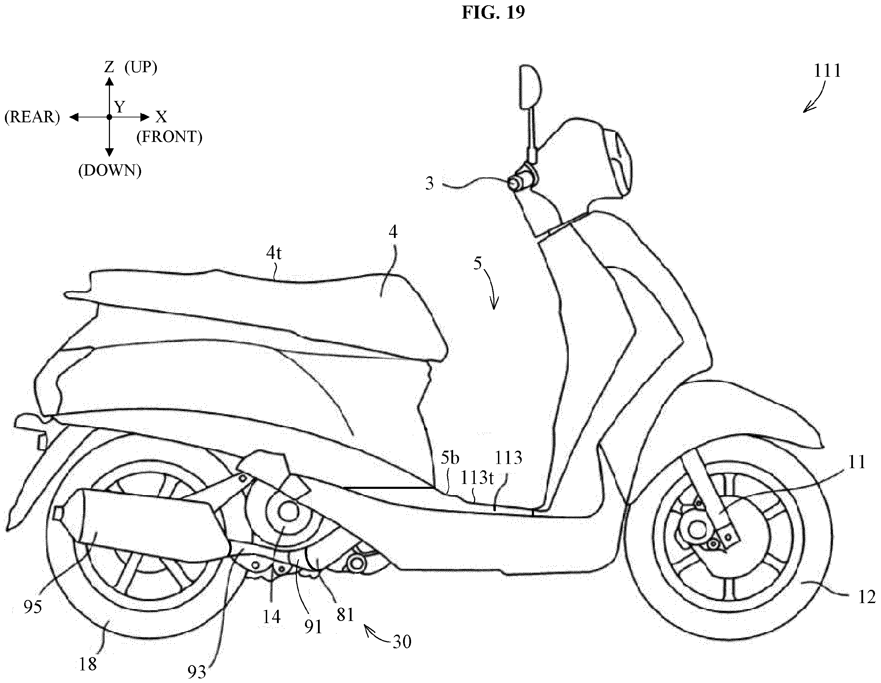

(7-3) Fig. 19 is a right side view of a straddled vehicle 111 according to another modification. Like numerals are used to identify like components which are the same as or similar to those in the present embodiment, and the components will not particularly be described. The straddled vehicle 111 is classified as a scooter type vehicle. The exhaust system 30 is used for the straddled vehicle 111 of a scooter type.

The straddled vehicle 111 does not include the center cover 6 and the foot bar 7 described in the present embodiment. The straddled vehicle 111 includes a foot board 113. The foot board 113 defines a recessed space 5 in the side view of the vehicle. Specifically, a foot board 113 has an upper edge 113t in the side view of the vehicle. The upper edge 113t is located at a position substantially same as a position of a lower edge 5b of a recessed space 5 in the side view of the vehicle. The upper edge 113t defines the lower edge 5b in the side view of the vehicle.

The foot board 113 has a flat plate shape. The foot board 113 extends in the transverse direction Y and the longitudinal direction X. The foot board 113 is large enough for the driver's feet to be placed on the foot board 113.

A driver puts the driver's feet on the foot board 113. The driver puts the driver's feet on the upper edge 113t in the side view of the vehicle. The recessed space 5 allows the driver to get on and off the straddled vehicle 111 easily. Especially, the recessed space 5 extends to a sufficiently low position. Specifically, the recessed space 5 extends to a height position same as the foot board 113. Consequently, the driver can insert the driver's legs into the recessed space 5 more easily. The driver can get on and off the straddled vehicle 111 more easily by inserting the driver's legs into the recessed space 5.

An engine 14 is supported by a vehicle body frame not shown. The engine 14 can rock relative to the vehicle body frame. The engine 14 is swingable relative to the vehicle body frame. The engine 14 is classified as a unit swing type engine.

An exhaust system 30 is fixed to the engine 14. The exhaust system 30 swings integrally with the engine 14. The exhaust system 30 swings integrally with the engine 14 relative to the vehicle body frame.

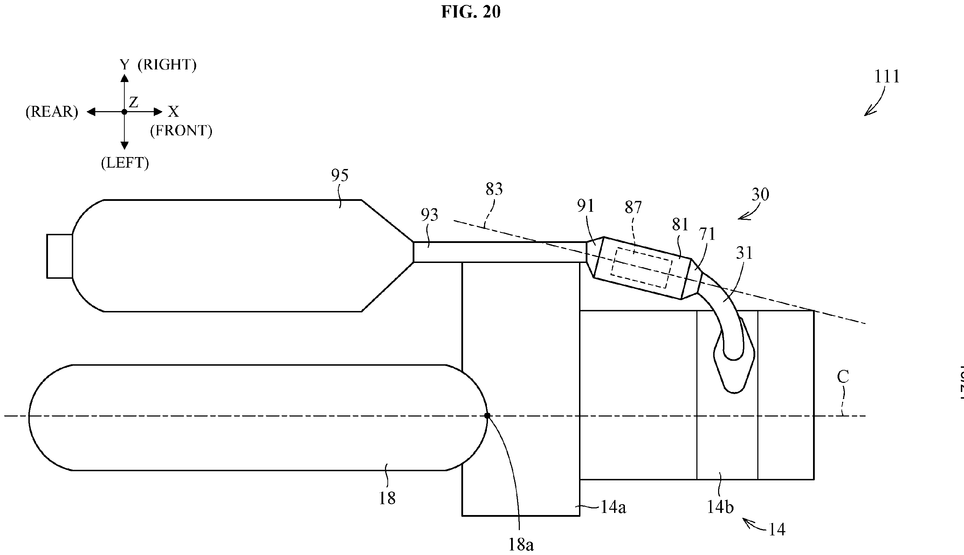

Fig. 20 is a partial bottom view of the straddled vehicle 111 according to the modification. A first exhaust pipe 31 extends rightward from the engine 14 in the bottom view of the vehicle. Then, the first exhaust pipe 31 is curved and extends rearward in the bottom view of the vehicle. An enlarged portion 71 extends rearward from the first exhaust pipe 31 in the bottom view of the vehicle. A housing portion 81 extends rearward from the enlarged portion 71 in the bottom view of the vehicle. A reduced portion 91 extends rearward from the housing portion 81 in the bottom view of the vehicle. A second exhaust pipe 93 extends rearward from the reduced portion 91 in the bottom view of the vehicle. A muffler 95 extends rearward from the second exhaust pipe 93 in the bottom view of the vehicle.

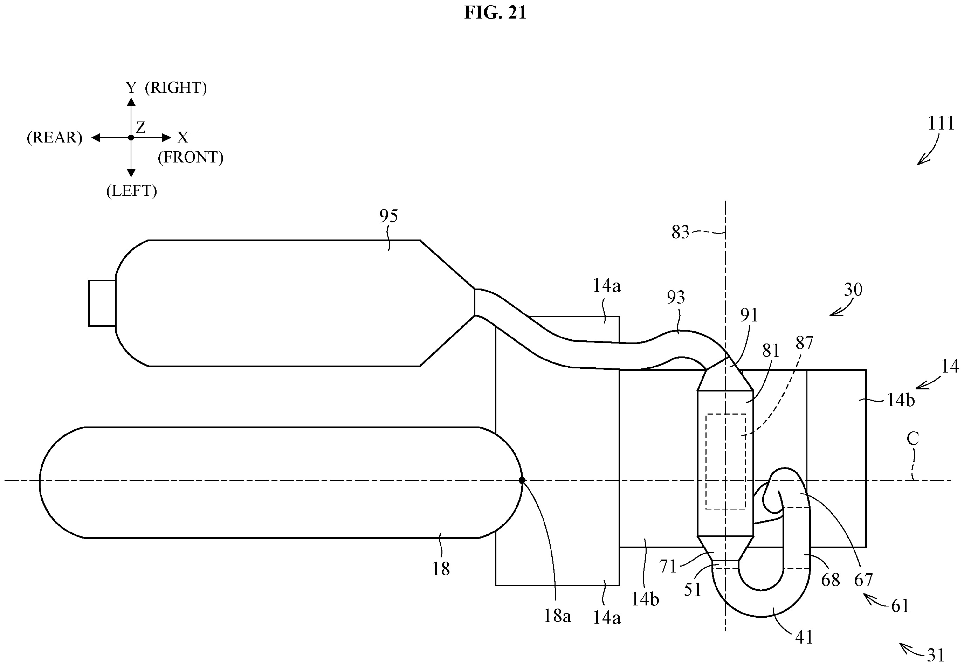

(7-4) Fig. 21 is a partial bottom view of the straddled vehicle 111 according to another modification. Like numerals are used to identify like components which are the same as or similar to those in the present embodiment, and the components will not particularly be described. The modification illustrated in Fig. 21 differs from the modification illustrated in Figs. 19 and 20 in the exhaust system 30.

A first exhaust pipe 31 extends rightward from an engine 14 in the bottom view of the vehicle. Then, the first exhaust pipe 31 is curved and extends leftward in the bottom view of the vehicle. Then, the first exhaust pipe 31 is further curved and extends rightward in the bottom view of the vehicle. An enlarged portion 71 extends rightward from the first exhaust pipe 31 in the bottom view of the vehicle. A housing portion 81 extends rightward from the enlarged portion 71 in the bottom view of the vehicle. A reduced portion 91 extends rightward from the housing portion 81 in the bottom view of the vehicle. A second exhaust pipe 93 extends rearward from the reduced portion 91 in the bottom view of the vehicle. A muffler 95 extends rearward from the second exhaust pipe 93 in the bottom view of the vehicle.

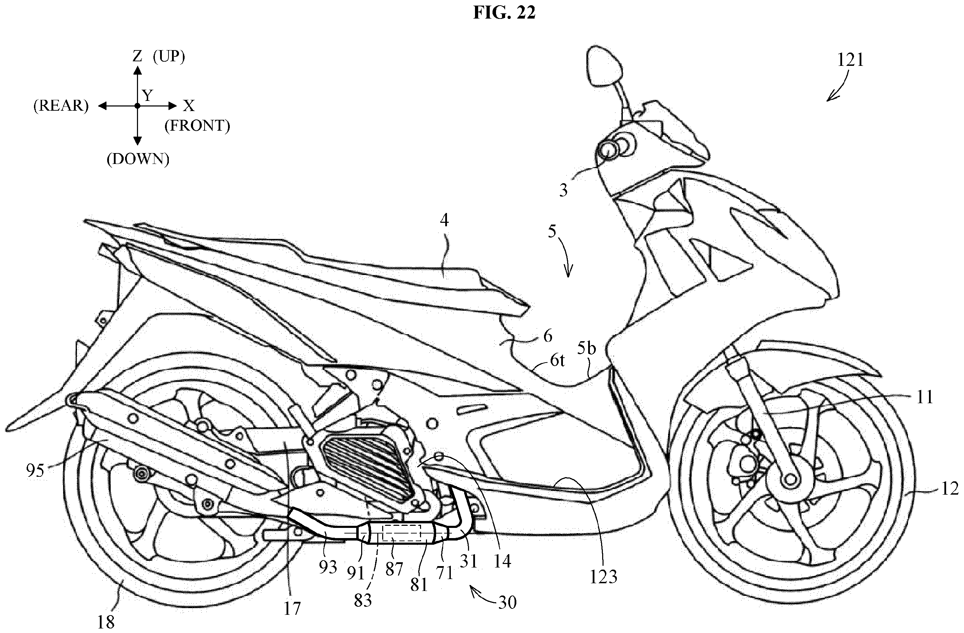

(7-5) Fig. 22 is a right side view of a straddled vehicle 121 according to another modification. Like numerals are used to identify like components which are the same as or similar to those in the present embodiment, and the components will not particularly be described. The straddled vehicle 121 is classified as a sport scooter type vehicle. The exhaust system 30 is used for the straddled vehicle 121 of a sport scooter type.

The straddled vehicle 121 does not include the foot bar 7 described in the present embodiment. The straddled vehicle 121 includes a right foot board 123 and a left foot board not shown. The right foot board 123 is located more rightward than the center cover 6. The left foot board is located more leftward than the center cover 6.

The right foot board 123 is located lower than the recessed space 5. The right foot board 123 is located lower than the lower edge 5b of the recessed space 5. The right foot board 123 is located lower than the lower edge 5b in the side view of the vehicle. The right foot board 123 has a flat plate shape. The right foot board 123 extends in the longitudinal direction X. The left foot board is similar to the right foot board 123.

A driver puts the driver's right foot on the right foot board 123. The driver puts the driver's left foot on the left foot board. The recessed space 5 allows the driver to get on and off the straddled vehicle 121 easily.

An engine 14 is supported by a vehicle body frame not shown. The engine 14 may be classified as a rigid mount engine. Alternatively, the engine 14 may be classified as a unit swing type engine.

A first exhaust pipe 31 extends downward from the engine 14 in the side view of the vehicle. Then, the first exhaust pipe 31 is curved and extends rearward in the side view of the vehicle. An enlarged portion 71 extends rearward from the first exhaust pipe 31 in the side view of the vehicle. A housing portion 81 extends rearward from the enlarged portion 71 in the side view of the vehicle. A reduced portion 91 extends rearward from the housing portion 81 in the side view of the vehicle. A second exhaust pipe 93 extends rearward from the reduced portion 91 in the side view of the vehicle. A muffler 95 extends rearward from the second exhaust pipe 93 in the side view of the vehicle.

(8) In the present embodiment, the first exhaust pipe 31 includes the upstream portion 61. However, the present invention is not limited to this. The first exhaust pipe 31 does not necessarily include the upstream portion 61, for example.

Reference is made to Fig. 17. The curved portion 41 extends to the engine 14. The curved portion 41 is directly connected to the engine 14. The first exhaust pipe 31 is composed of only the curved portion 41 and the straight portion 51. The first exhaust pipe 31 in the modification of Fig 17 does not include the upstream portion 61 in the present embodiment.

(9) In the present embodiment, the entire of the upstream portion 61 extends linearly. However, the present invention is not limited to this. The entire of the upstream portion 61 does not necessarily extend linearly. For example, at least part of the upstream portion 61 may be curved.

Reference is made to Fig. 18. The upstream portion 61 includes an upstream curved portion 64 and an upstream straight portion 65. The upstream curved portion 64 is curved. The upstream straight portion 65 extends linearly.

The upstream curved portion 64 extends to the engine 14, for example. The upstream curved portion 64 is connected to the engine 14, for example.

The upstream straight portion 65 extends linearly from the upstream curved portion 64 to the curved portion 41. The upstream straight portion 65 contacts the upstream curved portion 64. The upstream straight portion 65 contacts the curved portion 41.

Reference is made to Fig. 21. The upstream portion 61 includes an upstream curved portion 67 and an upstream straight portion 68. The upstream curved portion 67 is curved. The upstream straight portion 68 extends linearly.

The upstream curved portion 67 extends to the engine 14, for example. The upstream curved portion 67 is connected to the engine 14, for example.

The upstream straight portion 68 extends linearly from the upstream curved portion 67 to the curved portion 41. The upstream straight portion 68 contacts the upstream curved portion 67. The upstream straight portion 68 contacts the curved portion 41.

(10) In the present embodiment, the housing portion 81 extends in the longitudinal direction X. However, the present invention is not limited to this. The housing portion 81 may extend in the up-down direction Z. Alternatively, the housing portion 81 may extend in the transverse direction Y.

Reference is made to Fig. 17. The housing portion 81 extends in the up-down direction Z in the side view of the vehicle. Specifically, the central axis 83 of the housing portion 81 extends in the up-down direction Z in the side view of the vehicle. The central axis 83 is closer to the up-down direction Z than the longitudinal direction X in the side view of the vehicle. For example, the central axis 83 is substantially vertical in the side view of the vehicle.

Reference is made to Fig. 21. The housing portion 81 extends in the transverse direction Y in the bottom view of the vehicle. Specifically, the central axis 83 of the housing portion 81 extends in the transverse direction Y in the bottom view of the vehicle. The central axis 83 is closer to the transverse direction Y than the longitudinal direction X in the bottom view of the vehicle. The central axis 83 is orthogonal to the longitudinal direction X in the bottom view of the vehicle, for example. The central axis 83 is substantially parallel to the transverse direction Y in the bottom view of the vehicle, for example.

(11) In the present embodiment, the entire of the exhaust system 30 is located more rightward than the vehicle center plane C. However, the present invention is not limited to this. The entire of the exhaust system 30 may be located more leftward than the vehicle center plane C.

(12) In the present embodiment, the exhaust system 30 does not intersect with the vehicle center plane C. However, the present invention is not limited to this. The exhaust system 30 may intersect with the vehicle center plane C.

Reference is made to Fig. 21. The first exhaust pipe 31 intersects with the vehicle center plane C. The first exhaust pipe 31 includes a portion positioned rightward of the vehicle center plane C and a portion positioned leftward of the vehicle center plane C.

The entire of the enlarged portion 71 is located more leftward than the vehicle center plane C. The enlarged portion 71 does not intersect with the vehicle center plane C.

The housing portion 81 intersects with the vehicle center plane C. The housing portion 81 includes a portion positioned rightward of the vehicle center plane C and a portion positioned leftward of the vehicle center plane C.

The catalyst 87 intersects with the vehicle center plane C. The catalyst 87 includes a portion positioned rightward of the vehicle center plane C and a portion positioned leftward of the vehicle center plane C.

The exhaust system 30 intersects with the vehicle center plane C. The exhaust system 30 includes a portion positioned rightward of the vehicle center plane C and a portion positioned leftward of the vehicle center plane C.

(13) In the present embodiment, the exhaust system 30 includes the reduced portion 91. However, the present invention is not limited to this. For example, the exhaust system 30 does not necessarily include the reduced portion 91.

Reference is made to Figs. 17 and 18. The housing portion 81 and the second exhaust pipe 93 are connected not via the reduced portion 91. The second exhaust pipe 93 is connected directly to the housing portion 81.

As described above, the exhaust system 30 does not include the reduced portion 91 in the modification illustrated in Figs. 17 and 18. However, the present invention is not limited to this. In the modification illustrated in Figs. 17 and 18, the exhaust system 30 may further include a reduced portion 91 configured to connect the housing portion 81 to the second exhaust pipe 93.

(14) In the present embodiment, the exhaust system 30 may further include an additional catalyst in addition to the catalyst 87. For example, the additional catalyst is arranged inside of the muffler 95. Exhaust gases pass through the additional catalyst in the muffler 95. The additional catalyst purifies the exhaust gases in the muffler 95.

(15) In the present embodiment, the exhaust system 30 may further include a downstream oxygen sensor. The downstream oxygen sensor is located downstream of the catalyst 87 in the direction of the exhaust gas flow. The downstream oxygen sensor detects an oxygen concentration of the exhaust gases downstream of the catalyst 87.

For example, the downstream oxygen sensor is attached to the housing portion 81. Specifically, the downstream oxygen sensor is inserted from outside of the housing portion 81 into inside of the housing portion 81 through the housing portion 81. The downstream oxygen sensor is inserted from outside of the housing portion 81 into the third space 82c through the housing portion 81. The downstream oxygen sensor detects an oxygen concentration of exhaust gases in the third space 82c.

Alternatively, the downstream oxygen sensor is attached to either the reduced portion 91 or the second exhaust pipe 93. The downstream oxygen sensor detects an oxygen concentration of exhaust gases in either the reduced portion 91 or the second exhaust pipe 93.

(16) In the present embodiment, the number of the front wheel 12 is one. However, the present invention is not limited to this. The number of the front wheels 12 may be two. In the present embodiment, the number of rear wheels 18 is one. The present invention is not limited to this. The number of rear wheels 18 may be two.

(17) The foregoing embodiment and each of the modified embodiments described in paragraphs (1) to (16) above may be further varied as appropriate by replacing or combining their constructions with the constructions of the other modified embodiments.

## Claims

1. An exhaust system (30), comprising:
a first exhaust pipe (31) connected to an engine (14);
an enlarged portion (71) connected to the first exhaust pipe (31);
a housing portion (81) connected to the enlarged portion (71);
a catalyst (87) arranged inside of the housing portion (81);
a second exhaust pipe (93) connected to the housing portion (81); and
a muffler (95) connected to the second exhaust pipe (93);
the first exhaust pipe (31) including
a curved portion (41), and
a straight portion (51) extending linearly from the curved portion (41),
the enlarged portion (71) including
an upstream end (71a) connected to the straight portion (51), and
a downstream end (71b) connected to the housing portion (81),
the enlarged portion (71) forming a flow path (72) that enlarges from the upstream end (71a) of the enlarged portion (71) to the downstream end (71b) of the enlarged portion (71), and
the straight portion (51) being inserted from outside of the enlarged portion (71) into inside of the enlarged portion (71) through the upstream end (71a) of the enlarged portion (71), and extending toward the catalyst (87);
whereby the curved portion (41) has a central axis (43) passing through the center of a flow path (42) in the curved portion (41),
the curved portion (41) includes
an inner curved portion (41c) positioned more inward than the central axis (43) of the curved portion (41), having a U-shaped cross sectional face, and extending along the central axis (43) of the curved portion (41), and
an outer curved portion (41d) positioned more outward than the central axis (43) of the curved portion (41), having a U-shaped cross sectional face, and extending along the central axis (43) of the curved portion (41),
**characterised in that** the straight portion (51) includes
an inner straight portion (51c) continuing to the inner curved portion (41c), and
an outer straight portion (51d) continuing to the outer curved portion (41d), and
a length (G) of the outer straight portion (51d) is larger than a length (Gc) of the inner straight portion (51c).

2. The exhaust system (30) according to claim 1, wherein
the curved portion (41) is curved at an angle (θ2) of 45 degrees or more.

3. The exhaust system (30) according to claim 1 or 2, wherein
the straight portion (51) has an upstream end (51a) contacting the curved portion (41), and
a first distance (J1) between the upstream end (51a) of the straight portion (51) and the downstream end (71b) of the enlarged portion (71) is smaller than twice as large as a diameter (D2b) of the downstream end (71b) of the enlarged portion (71).

4. The exhaust system (30) according to claim 3, wherein
the catalyst (87) has an inlet face (87a) through which the exhaust gases enter the catalyst (87), and
a second distance (J2) between the upstream end (51a) of the straight portion (51) and the inlet face (87a) of the catalyst (87) is smaller than three times as large as a diameter (D2b) of the downstream end (71b) of the enlarged portion (71).

5. The exhaust system (30) according to any one of claims 1 to 4, wherein
the straight portion (51) includes a first section (54) positioned outside of the enlarged portion (71), and
a length (G1) of the first section (54) is smaller than a diameter (D2b) of the downstream end (71b) of the enlarged portion (71).

6. The exhaust system (30) according to claim 5, wherein
the straight portion (51) has a second section (56) positioned inside of the enlarged portion (71),
the second section (56) includes an outer surface (57),
the enlarged portion (71) includes an inner surface (74), and
at least part of the outer surface (57) of the second section (56) is apart from the inner surface (74) of the enlarged portion (71).

7. The exhaust system (30) according to any one of claims 1 to 6, wherein
a separation distance (K) between the straight portion (51) and the catalyst (87) is larger than a diameter (D2b) of the downstream end (71b) of the enlarged portion (71).

8. The exhaust system (30) according to any one of claims 1 to 7, wherein
the straight portion (51) has a downstream end (51b), and
the downstream end (51b) of the straight portion (51) is located inside of the enlarged portion (71) and is open to the enlarged portion (71).

9. The exhaust system (30) according to claim 8, wherein
the straight portion (51) has a central axis (53) passing through the center of a flow path (52) in the straight portion (51), and
the downstream end (51b) of the straight portion (51) is inclined relative to the central axis (53) of the straight portion (51).

10. The exhaust system (30) according to claim 8, wherein
the straight portion (51) has a central axis (53) passing through the center of a flow path (52) in the straight portion (51), and
the downstream end (51b) of the straight portion (51) is orthogonal to the central axis (53) of the straight portion (51).

11. The exhaust system (30) according to any one of claims 1 to 10, comprising:
an upstream oxygen sensor (97) attached to either the enlarged portion (71) or the housing portion (81).

12. The exhaust system (30) according to any one of the foregoing claims, wherein
the inner straight portion (51c) includes an inner second section (56c) positioned inside of the enlarged portion (71),
the outer straight portion (51d) includes an outer second section (56d) positioned inside of the enlarged portion (71), and
a length (G2) of the outer second section (56d) is larger than a length (G2c) of the inner second section (56c).

13. The exhaust system (30) according to claim 12, comprising:
an upstream oxygen sensor (97) attached to the enlarged portion (71); wherein
the enlarged portion (71) includes
an inner enlarged portion (71c) positioned outward of the inner second section (56c), and
an outer enlarged portion (71d) positioned outward of the outer second section (56d), and
the upstream oxygen sensor (97) is inserted from outside of the enlarged portion (71) into inside of the enlarged portion (71) through the inner enlarged portion (71c).

14. A straddled vehicle (1, 101, 111, 121), comprising
the exhaust system (30) according to any one of claims 1 to 13.

## Patentansprüche

1. Abgassystem (30), umfassend:
ein erstes Abgasrohr (31), das mit einem Motor (14) verbunden ist,
einen vergrößerten Teil (71), der mit dem ersten Abgasrohr (31) verbunden ist,
einen Gehäuseteil (81), der mit dem vergrößerten Teil (71) verbunden ist.
einen Katalysator (87), der in dem Gehäuseteil (81) angeordnet ist,
ein zweites Abgasrohr (93), das mit dem Gehäuseteil (81) verbunden ist, und
einen Schalldämpfer (95), der mit dem zweiten Abgasrohr (93) verbunden ist,
wobei das erste Abgasrohr (31) umfasst:
einen gekrümmten Teil (41), und
einen geraden Teil (51), der sich linear von dem gekrümmten Teil (41) erstreckt, wobei der vergrößerte Teil (71) umfasst:
ein stromaufwärts gelegenes Ende (71a), das mit dem geraden Teil (51) verbunden ist, und
ein stromabwärts gelegenes Ende (71b), das mit dem Gehäuseteil (81) verbunden ist,
wobei der vergrößerte Teil (71) einen Flusspfad (72) bildet, der sich von dem stromaufwärts gelegenen Ende (71a) des vergrößerten Teils (71) zu dem stromabwärts gelegenen Ende (71b) des vergrößerten Teils (71) vergrößert,
wobei der gerade Teil (51) von außerhalb des vergrößerten Teils (71) in das Innere des vergrößerten Teils (71) durch das stromaufwärts gelegene Ende (71a) des vergrößerten Teils (71) eingesteckt ist und sich zu dem Katalysator (87) erstreckt,
wobei der gekrümmte Teil (41) eine Mittenachse (43) aufweist, die sich durch die Mitte eines Flusspfads (42) in dem gekrümmten Teil (41) erstreckt,
wobei der gekrümmte Teil umfasst:
einen inneren gekrümmten Teil (41c), der weiter innen angeordnet ist als die Mittenachse (43) des gekrümmten Teils (41), eine U-förmige Querschnittfläche aufweist und sich entlang der Mittenachse (43) des gekrümmten Teils (41) erstreckt, und
einen äußeren gekrümmten Teil (41d), der weiter außen angeordnet ist als die Mittenachse (43) des gekrümmten Teils (41), eine U-förmige Querschnittfläche aufweist und sich entlang der Mittenachse (43) des gekrümmten Teils (41) erstreckt,
**dadurch gekennzeichnet, dass** der gerade Teil (51) umfasst:
einen inneren geraden Teil (51c), der an den inneren gekrümmten Teil (41c) anschließt, und
einen äußeren geraden Teil (51d), der an den äußeren gekrümmten Teil (41d) anschließt, und
wobei die Länge (G) des äußeren geraden Teils (51d) größer als die Länge (Gc) des inneren geraden Teils (51c) ist.

2. Abgassystem (30) nach Anspruch 1, wobei:
der gekrümmte Teil (41) mit einem Winkel (θ2) von 45 Grad oder mehr gekrümmt ist.

3. Abgassystem (30) nach Anspruch 1 oder 2, wobei:
der gerade Teil (51) ein stromaufwärts gelegenes Ende (51a) aufweist, das den gekrümmten Teil (41) kontaktiert, und
eine erste Distanz (J1) zwischen dem stromaufwärts gelegenen Ende (51a) des geraden Teils (51) und dem stromabwärts gelegenen Ende (71b) des vergrößerten Teils (71) kleiner als das Zweifache des Durchmessers (D2b) des stromabwärts gelegenen Endes (71b) des vergrößerten Teils (71) ist.

4. Abgassystem (30) nach Anspruch 3, wobei:
der Katalysator (87) eine Einlassfläche (87a) aufweist, durch die Abgase in den Katalysator (87) eintreten, und
eine zweite Distanz (J2) zwischen dem stromaufwärts gelegenen Ende (51a) des geraden Teils (51) und der Einlassfläche (87a) des Katalysators (87) kleiner als das Dreifache des Durchmessers (D2b) des stromabwärts gelegenen Endes (71b) des vergrößerten Teils (71) ist.

5. Abgassystem (30) nach einem der Ansprüche 1 bis 4, wobei:
der gerade Teil (51) einen ersten Abschnitt (54) umfasst, der außerhalb des vergrößerten Teils (71) angeordnet ist, und
die Länge (G1) des ersten Abschnitts (54) kleiner als der Durchmesser (D2b) des stromabwärts gelegenen Endes (71b) des vergrößerten Teils (71) ist.

6. Abgassystem (30) nach Anspruch 5, wobei:
der gerade Teil (51) einen zweiten Abschnitt (56) umfasst, der innerhalb des vergrößerten Teils (71) angeordnet ist,
der zweite Abschnitt (56) eine Außenfläche (57) umfasst,
der vergrößerte Teil (71) eine Innenfläche (74) umfasst, und
wenigstens ein Teil der Außenfläche (57) des zweiten Teils (56) von der Innenfläche (74) des vergrößerten Teils (71) beabstandet ist.

7. Abgassystem (30) nach einem der Ansprüche 1 bis 6, wobei:
die Trennungsdistanz (K) zwischen dem geraden Teil (51) und dem Katalysator (87) größer als der Durchmesser (D2b) des stromabwärts gelegenen Endes (71b) des vergrößerten Teils (71) ist.

8. Abgassystem (30) nach einem der Ansprüche 1 bis 7, wobei:
der gerade Teil (51) ein stromabwärts gelegenes Ende (51b) aufweist, und
das stromabwärts gelegene Ende (51b) des geraden Teils (51) in dem vergrößerten Teil (71) angeordnet ist und zu dem vergrößerten Teil (71) geöffnet ist.

9. Abgassystem (30) nach Anspruch 8, wobei:
der gerade Teil (51) eine Mittenachse (53) aufweist, die sich durch die Mitte eines Flusspfads (52) in dem geraden Teil (51) erstreckt, und
das stromabwärts gelegene Ende (51b) des geraden Teils (51) relativ zu der Mittenachse (53) des geraden Teils (51) geneigt ist.

10. Abgassystem (30) nach Anspruch 8, wobei:
der gerade Teil (51) eine Mittenachse (53) aufweist, die sich durch die Mitte des Flusspfads (52) in dem geraden Teil (51) erstreckt, und
das stromabwärts gelegene Ende (51b) des geraden Teils (51) orthogonal zu der Mittenachse (53) des geraden Teils (51) ist.

11. Abgassystem (30) nach einem der Ansprüche 1 bis 10, das umfasst:
einen stromaufwärts gelegenen Sauerstoffsensor (97), der an entweder dem vergrößerten Teil (71) oder dem Gehäuseteil (81) angebracht ist.

12. Abgassystem (30) nach einem der vorstehenden Ansprüche, wobei:
der innere gerade Teil (51c) einen inneren zweiten Abschnitt (56c) umfasst, der in dem vergrößerten Teil (71) angeordnet ist,
der äußere gerade Teil (51d) einen äußeren zweiten Abschnitt (56d) umfasst, der in dem vergrößerten Teil (71) angeordnet ist, und
die Länge (G2) des äußeren zweiten Abschnitts (56d) größer als die Länge (G2c) des inneren zweiten Abschnitts (56c) ist.

13. Abgassystem (30) nach Anspruch 12, das umfasst:
einen stromaufwärts gelegenen Sauerstoffsensor (97), der an dem vergrößerten Teil (71) angebracht ist,
wobei der vergrößerte Teil (71) umfasst:
einen inneren vergrößerten Teil (71c), der außerhalb des inneren zweiten Abschnitts (56c) angeordnet ist, und
einen äußeren vergrößerten Teil (71d), der außerhalb des äußeren zweiten Abschnitts (56d) angeordnet ist, und
wobei der stromaufwärts gelegene Sauerstoffsensor (97) von außerhalb des vergrößerten Teils (71) in das Innere des vergrößerten Teils (71) durch den inneren vergrößerten Teil (71c) eingesteckt ist.

14. Fahrzeug mit Sattel (1, 101, 111, 121), umfassend:
das Abgassystem (30) gemäß einem der Ansprüche 1 bis 13.

## Revendications

1. Système d'échappement (30) comprenant
un premier tuyau d'échappement (31) relié à un moteur (14) ;
une partie élargie (71) reliée au premier tuyau d'échappement (31) ;
une partie de logement (81) reliée à la partie élargie (71) ;
un catalyseur (87) disposé à l'intérieur de la partie du boîtier (81) ;
un second tuyau d'échappement (93) relié à la partie du boîtier (81) ; et
un silencieux (95) relié au second tuyau d'échappement (93) ;
le premier tuyau d'échappement (31) comprenant
une partie incurvée (41), et
une partie droite (51) s'étendant linéairement à partir de la partie incurvée (41), la partie élargie (71) comprenant
une extrémité amont (71a) reliée à la partie droite (51), et
une extrémité aval (71b) reliée à la partie du boîtier (81),
la partie élargie (71) formant une voie d'écoulement (72) qui s'élargit de l'extrémité amont (71a) de la partie élargie (71) à l'extrémité aval (71b) de la partie élargie (71), et
la partie droite (51) est insérée de l'extérieur de la partie élargie (71) à l'intérieur de la partie élargie (71) à travers l'extrémité amont (71a) de la partie élargie (71), et s'étend vers le catalyseur (87) ;
dans lequel la partie incurvée (41) présente un axe central (43) passant par le centre d'une voie d'écoulement (42) dans la partie incurvée (41),
la partie incurvée (41) comprend
une partie incurvée intérieure (41c) placée plus à l'intérieur que l'axe central (43) de la partie incurvée (41), ayant une face de section transversale en forme de U et s'étendant le long de l'axe central (43) de la partie incurvée (41), et
une partie incurvée extérieure (41d) placée plus à l'extérieur que l'axe central (43) de la partie incurvée (41), présentant une face de section transversale en forme de U et s'étendant le long de l'axe central (43) de la partie incurvée (41),
**caractérisée par le fait que** la partie droite (51) comprend
une partie droite intérieure (51c) se prolongeant par la partie incurvée intérieure (41c), et
une partie droite extérieure (51d) se prolongeant jusqu'à la partie courbe extérieure (41d), et
la longueur (G) de la partie droite extérieure (51d) est supérieure à la longueur (Gc) de la partie droite intérieure (51c).

2. Système d'échappement (30) selon la revendication 1, dans lequel
la partie incurvée (41) est incurvée à un angle (02) de 45 degrés ou plus.

3. Système d'échappement (30) selon la revendication 1 ou 2, dans lequel
la partie droite (51) a une extrémité amont (51a) en contact avec la partie incurvée (41), et
une première distance (J1) entre l'extrémité amont (51a) de la partie droite (51) et l'extrémité aval (71b) de la partie élargie (71) est inférieure à deux fois un diamètre (D2b) de l'extrémité aval (71b) de la partie élargie (71).

4. Système d'échappement (30) selon la revendication 3, dans lequel
le catalyseur (87) possède une face d'entrée (87a) par laquelle les gaz d'échappement pénètrent dans le catalyseur (87), et
une seconde distance (J2) entre l'extrémité amont (51a) de la partie droite (51) et la face d'entrée (87a) du catalyseur (87) est inférieure à trois fois un diamètre (D2b) de l'extrémité aval (71b) de la partie élargie (71).

5. Système d'échappement (30) selon l'une quelconque des revendications 1 à 4, dans lequel la partie droite (51) comprend une première section (54) placée à l'extérieur de la partie élargie (71), et
une longueur (G1) de la première section (54) est inférieure à un diamètre (D2b) de l'extrémité aval (71b) de la partie élargie (71).

6. Système d'échappement (30) selon la revendication 5, dans lequel
la partie droite (51) comporte une seconde section (56) placée à l'intérieur de la partie élargie (71),
la seconde section (56) comprend une surface extérieure (57), la partie élargie (71) comprend une surface intérieure (74), et au moins une partie de la surface extérieure (57) de la seconde section (56) est séparée de la surface intérieure (74) de la partie élargie (71).

7. Système d'échappement (30) selon l'une quelconque des revendications 1 à 6, dans lequel
une distance de séparation (K) entre la partie droite (51) et le catalyseur (87) est supérieure à un diamètre (D2b) de l'extrémité aval (71b) de la partie élargie (71).

8. Système d'échappement (30) selon l'une quelconque des revendications 1 à 7, dans lequel la partie droite (51) a une extrémité aval (51b), et l'extrémité aval (51b) de la partie droite (51) est située à l'intérieur de la partie élargie (71) et est ouverte sur la partie élargie (71).

9. Système d'échappement (30) selon la revendication 8, dans lequel
la partie droite (51) a un axe central (53) passant par le centre d'une voie d'écoulement (52) dans la partie droite (51), et
l'extrémité aval (51b) de la partie droite (51) est inclinée par rapport à l'axe central (53) de la partie droite (51).

10. Système d'échappement (30) selon la revendication 8, dans lequel
la partie droite (51) a un axe central (53) passant par le centre d'une voie d'écoulement (52) dans la partie droite (51), et
l'extrémité aval (51b) de la partie droite (51) est orthogonale à l'axe central (53) de la partie droite (51).

11. Système d'échappement (30) selon l'une quelconque des revendications 1 à 10, comprenant :
un capteur d'oxygène en amont (97) fixé à la partie élargie (71) ou à la partie du boîtier (81).

12. Système d'échappement (30) selon l'une quelconque des revendications précédentes, dans lequel la partie droite intérieure (51c) comprend une seconde section intérieure (56c) positionnée à l'intérieur de la partie élargie (71),
la partie droite extérieure (51d) comprend une seconde section extérieure (56d) placée à l'intérieur de la partie élargie (71), et
la longueur (G2) de la seconde section extérieure (56d) est supérieure à la longueur (G2c) de la seconde section intérieure (56c).

13. Système d'échappement (30) selon la revendication 12, comprenant :
un capteur d'oxygène en amont (97) fixé à la partie élargie (71) ; dans lequel
la partie élargie (71) comprend
une partie intérieure élargie (71c) positionnée à l'extérieur de la seconde section intérieure (56c), et
une partie extérieure élargie (71d) positionnée à l'extérieur de la seconde section extérieure (56d), et
le capteur d'oxygène en amont (97) est inséré de l'extérieur de la partie élargie (71) à l'intérieur de la partie élargie (71) à travers la partie élargie intérieure (71c).

14. Véhicule à enfourcher (1, 101, 111, 121), comprenant
le système d'échappement (30) selon l'une quelconque des revendications 1 à 13.
